(19) Europäisches Patentamt
European Patent Office
Office européen des brevets

(11) **EP 2 443 802 B1**

(12) **FASCICULE DE BREVET EUROPEEN**

(45) Date de publication et mention
de la délivrance du brevet:
**27.12.2017  Bulletin 2017/52**

(21) Numéro de dépôt: **10738012.3**

(22) Date de dépôt: **15.06.2010**

(51) Int Cl.:
*H04L 5/00* (2006.01)     *H04L 25/03* (2006.01)
*H04L 27/26* (2006.01)

(86) Numéro de dépôt international:
**PCT/FR2010/051189**

(87) Numéro de publication internationale:
**WO 2010/146301 (23.12.2010 Gazette 2010/51)**

(54) **PROCEDES D'EMISSION ET DE RECEPTION D'UN SIGNAL MULTIPORTEUSE METTANT EN OEUVRE DES FILTRES PROTOTYPES, DISPOSITIFS D'EMISSION ET DE RECEPTION, SIGNAL ET PROGRAMME D'ORDINATEUR CORRESPONDANTS**

VERFAHREN ZUM SENDEN UND EMPFANGEN EINES MEHRTRÄGERSIGNALS MIT PROTOTYPFILTERN SOWIE ENTSPRECHENDE ÜBERTRAGUNGS- UND EMPFANGSVORRICHTUNGEN, SIGNAL UND COMPUTERPROGRAMM

METHODS FOR TRANSMITTING AND RECEIVING A MULTICARRIER SIGNAL USING PROTOTYPE FILTERS, AND CORRESPONDING TRANSMISSION AND RECEPTION DEVICES, SIGNAL AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité:  **16.06.2009  FR 0954055**

(43) Date de publication de la demande:
**25.04.2012  Bulletin 2012/17**

(73) Titulaire: **Orange**
**75015 Paris (FR)**

(72) Inventeurs:
• **SIOHAN, Pierre**
**F-35200 Rennes (FR)**
• **LIN, Hao**
**F-35700 Rennes (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**US-A1- 2006 133 519     US-A1- 2008 080 627**

• **LELE C ET AL: "Preamble-based channel estimation techniques for OFDM/OQAM over the powerline" PROCEEDINGS OF THE IEEE INTERNATIONAL SYMPOSIUM ON POWER LINE COMMUNICATIONS AND ITS APPLICATIONS, 1 mars 2007 (2007-03-01) , pages 59-64, XP031176308 ISBN: 978-1-4244-1089-7 cité dans la demande**
• **GERALD MATZ ET AL: "Analysis, Optimization, and Implementation of Low-Interference Wireless Multicarrier Systems" IEEE TRANSACTIONS ON WIRELESS COMMUNICATIONS, vol. 6, no. 5, 1 mai 2007 (2007-05-01), pages 1921-1931, XP011181459 ISSN: 1536-1276**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**1. Domaine de l'invention**

Le domaine de l'invention est celui des communications numériques.

Plus précisément, l'invention concerne l'émission et la réception de signaux à porteuses multiples ayant subi une modulation de type OFDM/OQAM (en anglais « Orthogonal Frequency Division Multiplexing / Offset Quadrature Amplitude Modulation ») ou BFDM/OQAM (en anglais « Biorthogonal Frequency Division Multiplexing / OQAM »), pour lesquelles les porteuses sont mises en forme par un filtre prototype, et dans lesquels un préambule est inséré avant émission. En particulier, l'invention concerne la construction de tels filtres prototypes implémentés dans les émetteurs ou les récepteurs.

L'invention s'applique aux communications filaires (xDSL, PLC, optique, etc) et aux communications sans fil (DAB, DVB-T, WLAN, optique non guidée, etc), mises en oeuvre dans le cadre de transmissions point à point ou multi-points à multi-points (SISO ou MIMO). On note que l'invention est particulièrement bien adaptée aux transmissions par courants porteurs en ligne (PLC).

**2. Art antérieur**

Les techniques de transmission à porteuses multiples présentent de nombreux avantages, notamment dans le contexte de canaux multi-trajets, filaires ou non.

Ainsi, les modulations de type OFDM sont particulièrement bien adaptées pour contrer les effets des évanouissements dans les canaux à trajets multiples. Toutefois, ces modulations OFDM présentent l'inconvénient de générer un signal présentant une mauvaise localisation fréquentielle.

Des solutions alternatives ont alors été proposées, aboutissant à des techniques de modulation à porteuses multiples dans lesquelles le signal est mis en forme par des filtres (pour un signal discrétisé) ou des fonctions (pour un signal continu), dits prototypes, permettant une meilleure localisation fréquentielle grâce à des propriétés d'orthogonalité. Il s'agit par exemple des modulations de type OFDM/OQAM ou BFDM/OQAM, classiquement utilisées pour les communications radiofréquences, telles que décrites notamment dans la demande de brevet WO 2008/007019 publiée le 17 janvier 2008, au nom du même Demandeur. On rappelle que le signal OFDM/OQAM peut être représenté, sous forme discrète, sous la forme suivante :

$$s[k] = \sum_{m=0}^{M-1} \sum_{n \in \mathbb{Z}} a_{m,n} \underbrace{g[k-nN] e^{j\frac{2\pi}{M}m\left(k-\frac{D}{2}\right)} e^{j\phi_{m,n}}}_{g_{m,n}[k]},$$

avec :

- $a_{m,n}$ un élément de données à valeur réelle à transmettre sur une porteuse $m$ à l'instant $n$ ;
- $M$ le nombre de fréquences porteuses ;
- $g$ le filtre prototype utilisé par le modulateur ;
- $D = L_g$ -1, avec $L_g$ la longueur du filtre prototype $g$ :
- $N = M / 2$ un décalage temporel discret ;
- $\phi_{m,n}$ un terme de phase choisi de manière à réaliser une alternance partie réelle-partie imaginaire permettant l'orthogonalité, ou plus généralement la biorthogonalité, par exemple égal à $\frac{\pi}{2}(n+m) + \phi_0$ , avec $\phi_0$ choisi arbitrairement ; et
- $j^2 = -1$.

Cependant, un inconvénient de ces techniques de modulation OFDM/OQAM ou BFDM/OQAM est que la condition d'orthogonalité ou de bi-orthogonalité n'est réalisée que pour les valeurs réelles des éléments de données à transmettre. Or le fait de ne disposer que d'une orthogonalité des translatées au sens réel rend le processus d'estimation de canal plus délicat.

En effet, pour estimer le gain complexe du canal sur une porteuse donnée, il convient de réaliser la projection complexe du signal reçu sur ladite porteuse. Or, le fait qu'il n'y ait pas d'intervalle de garde et que l'orthogonalité soit seulement réelle selon ce type de modulation, implique la présence d'interférence intrinsèque intra et inter-porteuses, même sur un canal idéal. En effet, la partie imaginaire de la projection du signal reçu sur la base des translatées du filtre prototype n'est pas nulle. Cela se traduit par un terme perturbateur qui vient s'ajouter au signal démodulé, et dont il faut tenir compte pour l'estimation du canal.

Concrètement, si on émet l'élément de données $a_{m,n}$ à l'emplacement fréquence/temps $(m,n)$, on peut montrer que l'on obtient en réception le signal suivant, sans tenir compte du bruit :

$$y_{m,n}^{(c)} \approx H_{m,n}^{(c)}\left(a_{m,n} + ja_{m,n}^{(i)}\right),$$

où $H_{m,n}^{(c)}$ désigne le coefficient du canal et $a_{m,n}^{(i)}$ l'interférence résiduelle qui subsiste autour du symbole d'indice $n$ et de chaque porteuse d'indice $m$.

Les approches d'estimation par préambule considérées jusqu'à ce jour cherchent à optimiser la structure du préambule, en produisant soit un préambule qui permette d'annuler l'interférence à la réception, comme décrit dans la demande de brevet WO 02/25883 publiée le 28 mars 2002, soit au contraire un préambule qui augmente la puissance de cette interférence en réception, comme décrit dans la demande de brevet WO 2008/007019 précitée.

Cette deuxième approche, également appelée IAM pour « Interference Approximation Method », permet d'obtenir de meilleurs résultats pour l'estimation de canal. En effet, à puissance de transmission donnée, le gain escompté par cette approche IAM croît en proportion de l'interférence imaginaire générée pour chaque élément de donnée transmis. L'augmentation de l'interférence est donc bénéfique jusqu'à un certain point.

Selon cette deuxième approche, et comme décrit dans la demande de brevet WO 2008/007019 précitée, le récepteur utilise une approximation de l'interférence résiduelle $a_{m,n}^{(i)}$. Par exemple, si l'on considère un voisinage de taille $3 \times 3$, noté $\Omega_{1,1}^{*}$, autour d'une position fréquence-temps $(m_0,n_0)$, en excluant la position $(m_0,n_0)$, la composante imaginaire $a_{m,n}^{(i)}$ peut être approximée par :

$$a_{m_0,n_0}^{(i)} \approx \sum_{(p,q)\in\Omega_{1,1}^{*}} a_{m_0+p,n_0+q}\left\langle g\right\rangle_{m_0+p,n_0+q}^{m_0,n_0}$$

où $\left\langle g\right\rangle_{m_0+p,n_0+q}^{m_0,n_0}$ est égal au produit scalaire de $g_{m_0,n_0}$ par $g_{m_0+p,n_0+q}$.

En présence d'un bruit $\eta$, cela conduit à une estimation de canal donnée par :

$$\hat{H}_{m_0,n_0}^{(c)} = H_{m_0,n_0}^{(c)} + \frac{\eta_{m_0,n_0}}{\left(a_{m_0,n_0} + ja_{m_0,n_0}^{(i)}\right)}.$$

De manière à amplifier ou « booster » la puissance du préambule reçu, des structures de préambule particulière ont été proposées, comme celle dénommée IAM1 dans le document *« Preamble-based channel estimation techniques for OFDM/OQAM over the powerline »* (ISPLC 2007, Mars 2007, C. Lélé, P. Siohan, R. Legouable, et J.-P. Javaudin).

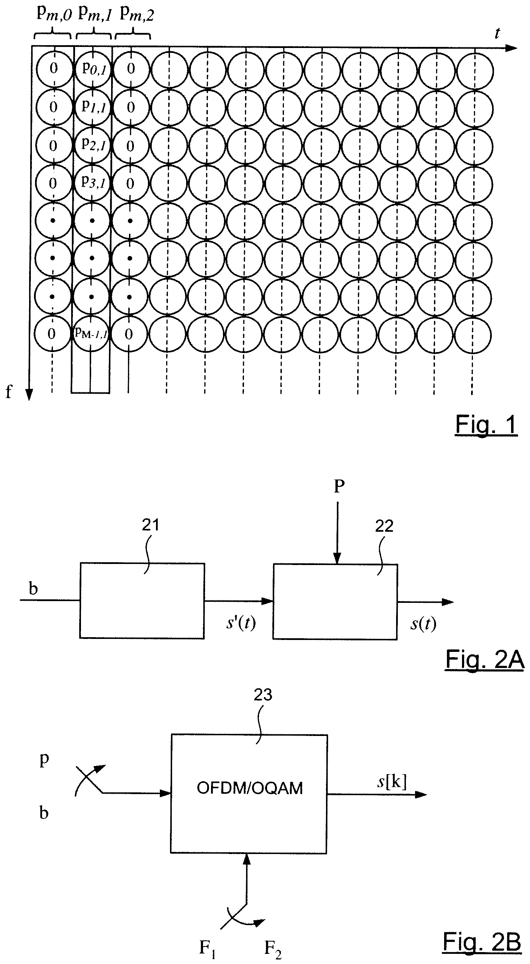

Par exemple, la séquence illustrée en figure 1 comprend :

- un préambule IAM1 composé de trois symboles de préambule, référencés $p_{m,0}$, $p_{m,1}$ et $p_{m,2}$, avec $m$ l'indice pour les fréquences porteuses et 0, 1, 2 l'indice temporel, chaque symbole de préambule comprenant $M$ pilotes dont la valeur et l'emplacement à l'émission sont connus d'au moins un récepteur destiné à effectuer une réception du signal à porteuses multiples ; et
- des symboles de données.

La structure du préambule IAM1 est telle que :

- $p_{m,0} = p_{m,2} = 0,$
- $p_{4k,1} = p_{4k+1,1} = 1,$ et
- $p_{4k+2,1} = p_{4k+3,1} = -1,$

avec $k = 0,...,$ *M*/4-1 et *M* le nombre de porteuses par symbole multiporteuse.

Par conséquent, le pilote reçu à la m-ième fréquence et pour le symbole $p_{m,1}$ d'indice temporel 1, entaché d'interférences (encore appelé « pseudo-pilote »), peut s'écrire :

$$b_{m,1} \approx p_{m,1} + j\left( 2 p_{m+1,1} \langle g \rangle_{m+1,1}^{m,1} \right)$$

où $\langle g \rangle_{m+1,1}^{m,1}$ correspond au produit scalaire des filtres $g_{m+1,1}[k]$ et $g_{m,1}[k]$.

En notant $\left| \langle g \rangle_{m+1,1}^{m,1} \right| = \beta_0,$ alors la puissance du « pseudo-pilote » peut s'exprimer sous la forme suivante :

$$E\left[ \left| b_{m,1}^2 \right| \right] = 2\sigma_a^2 \left( 1 + 4\beta_0^2 \right),$$

où $\sigma_a^2$ correspond à la variance des éléments de données $a_{m,n}$.

D'autres structures de préambule de même longueur (trois symboles de préambule, c'est-à-dire 3*M* pilotes) ont également été proposées, aboutissant à des expressions encore plus favorables pour la puissance du « pseudo-pilote », comme proposé dans le document « 2 db better than CP-OFDM with OFDM/OQAM for preamble-based channel estimation » (ICC 2008, Mai 2008. C. Lélé, P. Siohan, et R. Legouable).

On observe que, dans tous les cas, la qualité de l'estimation de canal reste en relation directe avec le paramètre $\beta_0$. Ainsi, les meilleurs résultats (c'est-à-dire les valeurs les plus élevées du paramètre $\beta_0$) sont obtenus avec des filtres orthogonaux bien localisés en temps et en fréquence.

Ainsi, les filtres prototypes classiquement utilisés sont la fonction IOTA (en anglais « Isotropic Orthogonal Transform Algorithm ») discrétisée et tronquée à une longueur 4*M*, ou le filtre prototype de longueur *M* appelé TFL (« Time Frequency Localization ») optimisé pour un critère défini, pour un signal à valeurs réelles, par un paramètre de localisation temps-fréquence :

$$\xi = \frac{1}{4\pi\sqrt{m_2 M_2}},$$

où $m_2$ et $M_2$ sont respectivement les moments d'ordre 2 en temps et fréquence définis dans le document « Product of second moments in time and frequency for discrète time signals and the uncertainty limit » (Signal Processing, vol. 67, M. I. Doroslovacki), tels que :

$$m_2(x) = \frac{1}{\|x\|^2} \sum_{k \in \mathbb{Z}} \left( k - \frac{1}{2} - T(x) \right)^2 \left[ \frac{x[k] + x[k-1]}{2} \right]^2$$

$$M_2(x) = \frac{1}{(2\pi)^2 \|x\|^2} \sum_{k \in \mathbb{Z}} \left[ x[k] - x[k-1] \right]^2$$

avec :

$$T(x) = \frac{\displaystyle\sum_{k\in\mathbb{Z}} \left(k - \frac{1}{2}\right)\left[x[k] + x[k-1]\right]^2}{\displaystyle\sum_{k\in\mathbb{Z}} \left[x[k] + x[k-1]\right]^2} \, .$$

On note que la localisation temps-fréquence $\xi$ d'un signal discret possède une borne supérieure $\xi \lesssim 1$.

L'ensemble de ces techniques permet d'obtenir des structures de préambule permettant d'accroître la puissance du « pseudo-pilote », et donc d'accroître le niveau d'interférence produit en réception. Les porteuses du préambule sont ensuite mises en forme en utilisant des filtres prototypes orthogonaux ou bi-orthogonaux, classiquement utilisés dans le cadre de modulations OFDM/OQAM ou BFDM/OQAM respectivement.

Malheureusement, un inconvénient de cette approche d'estimation par préambule visant à produire un préambule qui augmente la puissance de l'interférence en réception est qu'elle ne permet pas de garantir, pour une structure de préambule donnée, que l'on obtienne un « pseudo-pilote » d'énergie maximale.

De plus, le fait de disposer d'une orthogonalité au sens réel rend le processus d'estimation de canal plus délicat.

Il existe donc un besoin pour une nouvelle technique d'émission et/ou de réception d'un signal à porteuses multiples comprenant un préambule ayant subi une modulation de type OFDM/OQAM ou BFDM/OQAM permettant de remédier à au moins certains de ces inconvénients, et notamment d'estimer correctement le canal de transmission.

### 3. Exposé de l'invention

L'invention propose une solution nouvelle qui ne présente pas l'ensemble de ces inconvénients de l'art antérieur, sous la forme d'un procédé d'émission d'un signal à porteuses multiples formé d'une succession temporelle de symboles multiporteuses, comprenant :

- au moins un préambule formé d'au moins trois symboles multiporteuses consécutifs, dits symboles de préambule, portant des éléments de données à valeur complexe associés chacun à une porteuse dudit signal, et
- des symboles multiporteuses, dits symboles de données, portant des éléments de données à valeur réelle associés chacun à une porteuse dudit signal,

caractérisé en ce que ledit procédé d'émission comprend une étape de mise en forme desdites porteuses, mettant en oeuvre :

- un filtrage, par un premier filtre prototype, des porteuses portant lesdits éléments de données à valeur complexe correspondant auxdits symboles de préambule, permettant de mettre en forme lesdits symboles de préambule, et
- un filtrage, par un deuxième filtre prototype distinct dudit premier filtre prototype, des porteuses portant lesdits éléments de données à valeur réelle correspondant auxdits symboles de données, permettant de mettre en forme lesdits symboles de données.

On se place ainsi dans le contexte de l'émission de signaux multiporteuses comprenant un préambule, et pour lesquels les porteuses sont mises en forme par des filtres prototypes, de type OFDM/OQAM ou BFDM/OQAM par exemple.

On rappelle que, dans ce contexte, les symboles de données portent des éléments de données à valeur réelle. Ainsi, l'efficacité spectrale de l'OFDM/OQAM est identique à celle de l'OFDM classique sans intervalle de garde. En effet, en notant $v_0$ l'espacement entre deux porteuses adjacentes du multiplex, et $\tau_0$ l'espacement temporel entre deux éléments de données à valeurs réelles, on transmet pour un même espacement inter-porteuses $v_0$ :

- en OFDM/OQAM, une valeur réelle par porteuse tous les intervalles de temps $\tau_0$ ;
- en OFDM classique sans intervalle de garde, une valeur complexe (i.e. deux valeurs réelles) tous les $2 \times \tau_0$.

Selon l'invention, il est alors possible d'utiliser des filtres prototypes distincts pour la mise en forme des symboles de préambule et des symboles de données.

En particulier, les symboles de préambule peuvent être mis en forme par un premier filtre prototype quelconque, c'est-à-dire non nécessairement orthogonal ou bi-orthogonal.

De cette façon, la contrainte d'orthogonalité au sens réel pour les symboles de préambule qui, selon l'art antérieur, limitait le choix des filtres prototypes ne s'applique plus. Au contraire, le premier filtre prototype n'est pas nécessairement orthogonal.

Les symboles de données sont quant à eux classiquement mis en forme au moyen d'un deuxième filtre prototype orthogonal ou bi-orthogonal, de type IOTA ou TFL par exemple. Cela signifie que les translatées dans l'espace temps/fréquence du deuxième filtre prototype sont orthogonales ou bi-orthogonales entre elles, ce qui permet une meilleure localisation fréquentielle du signal multiporteuse.

On utilise ainsi deux filtres prototypes distincts, l'un pour le préambule, déterminé de façon à obtenir une bonne estimation du canal de transmission, et l'autre pour les données utiles, orthogonal ou bi-orthogonal, pour assurer une bonne transmission de la charge utile.

En effet, les inventeurs ont constaté que les solutions de l'art antérieur qui utilisent un unique filtre prototype choisi en fonction de critères liés à la transmission des données utiles, et non à l'estimation de canal, ne conduisent pas forcément à la meilleure estimation de canal. Le rôle du filtre prototype est donc non négligeable pour obtenir une bonne estimation de canal.

Selon un aspect particulier de l'invention, le préambule comprend deux symboles de préambule d'extrémité constitués d'éléments de données portant une valeur nulle, encadrant au moins un symbole de préambule central constitué de pilotes $p_i$ portant une valeur égale à 1 ou -1, avec $i \in [0,M\text{-}1]$ l'indice de la porteuse associée au pilote $p_i$ et $M$ le nombre de porteuses associées au symbole de préambule central, tel que, pour $k = 0,...,M/4\text{-}1$ :

- $p_{4k} = p_{4k+1} = 1$ et
- $P_{4k+2} = p_{4k+3} = -1$.

Cette structure particulière de préambule, encore appelée IAM1 et décrite en relation avec l'art antérieur, permet notamment d'augmenter l'interférence résiduelle en réception. Combinée à une mise en forme par un filtre prototype non nécessairement orthogonal (premier filtre prototype), une telle structure permet de simplifier et d'améliorer les performances du processus d'estimation de canal mis en oeuvre en réception.

Selon une variante, le préambule comprend au moins un pilote portant une valeur imaginaire pure.

Bien entendu, le nombre de symboles de préambule peut être supérieur ou égal à trois. Toutefois, on considère qu'un préambule présentant trois symboles multiporteuses est le plus efficace pour l'estimation de canal.

Selon un mode de réalisation particulier de l'invention, le premier filtre prototype $g[k]$ prend la forme discrète suivante :

$$g[k] = \frac{F(0)}{2^K} \frac{\Gamma(K+1)}{\Gamma(K/2+1-k \cdot T_r) \Gamma(K/2+1+k \cdot T_r)}$$

avec :

- $K = L_g$ -1, avec $Lg$ la longueur dudit premier filtre prototype ;
- $F(0)$ une constante ;
- $\Gamma(\cdot)$ la fonction gamma ; et
- $T_r$ un paramètre de résolution temporelle.

La fonction gamma est bien connue de l'Homme du Métier. Pour des entiers $k \in \mathbb{Z}$, elle s'exprime sous la forme suivante :

- $[\Gamma(k)]^{-1} = 0$ pour $k \leq 0$ ;
- $\Gamma(k) = (k\text{-}1)!$ pour $k \neq 0$ et $k \in \mathbb{N}$, avec ! l'opérateur factorielle.

Ce premier filtre prototype est utilisé uniquement pendant la durée de transmission du préambule, et est déterminé de façon à obtenir une bonne estimation du canal de transmission. Il n'est pas nécessairement orthogonal, ou bi-orthogonal, mais permet de maximiser le paramètre $\beta_0$ défini en relation avec l'art antérieur, encore appelé premier paramètre.

En particulier, ce premier filtre prototype est bien localisé dans le domaine temporel et fréquentiel, et permet

$$a_{m_0,n_0}^{(i)} \approx \sum_{(p,q) \in \Omega_{1,1}^*} a_{m_0+p,n_0+q} \langle g \rangle_{m_0+p,n_0+q}^{m_0,n_0}$$

de garantir que l'approximation donnée par l'équation est valide.

Selon une première variante, le procédé d'émission comprend une étape de détermination du paramètre de

résolution temporelle $T_r$ du premier filtre prototype $g[k]$, à partir d'un premier paramètre $\beta_0$ et d'un deuxième paramètre $\beta_I$, tels que :

$$\beta_0 = \left| \sum_k g^2[k] \cos\left( 2\pi \frac{k}{M} \right) \right|_{et}$$

$$\beta_I = \left| \sum_p j^p \sum_k g^2[k] \cos\left( 2\pi \frac{pk}{M} \right) \right|,$$

avec $j^2 = -1$, $M$ le nombre de porteuses par symbole multiporteuse et $L_g = M$.

Selon cette première variante, l'étape de détermination permet de maximiser le premier paramètre $\beta_0$ et/ou de minimiser le deuxième paramètre $\beta_I$.

Selon une deuxième variante, le procédé d'émission comprend une étape de détermination dudit paramètre de résolution temporelle $T_r$ du premier filtre prototype $g[k]$, à partir d'une combinaison linéaire d'un premier paramètre $\beta_0$ et d'un deuxième paramètre $\beta_I$, égale à $w\beta_0-(1-w)\beta_I$, telle que :

- w est un facteur de pondération tel que $0 \leq w \leq 1$ ;

$$\beta_0 = \left| \sum_k g^2[k] \cos\left( 2\pi \frac{k}{M} \right) \right| ;_{et}$$

$$\beta_I = \left| \sum_p j^p \sum_k g^2[k] \cos\left( 2\pi \frac{pk}{M} \right) \right| ;$$

-

avec $j^2=-1$, $M$ le nombre de porteuses par symbole multiporteuse et $L_g = M$.

Selon cette deuxième variante, l'étape de détermination permet de maximiser la combinaison linéaire $w\beta_0 - (1- w)\beta_I$.

Un autre aspect de l'invention concerne un programme d'ordinateur comportant des instructions pour la mise en oeuvre du procédé d'émission tel que décrit ci-dessus, lorsque ledit programme est exécuté par un processeur.

On note en effet que le procédé selon l'invention peut être mis en oeuvre de diverses manières, notamment sous forme câblée ou sous forme logicielle.

Dans un autre mode de réalisation, l'invention concerne un dispositif d'émission d'un signal à porteuses multiples formé d'une succession temporelle de symboles multiporteuses, comprenant :

- au moins un préambule formé d'au moins trois symboles multiporteuses consécutifs, dits symboles de préambule, portant des éléments de données à valeur complexe associés chacun à une porteuse dudit signal, et
- des symboles multiporteuses, dits symboles de données, portant des éléments de données à valeur réelle associés chacun à une porteuse dudit signal.

Selon l'invention, le dispositif d'émission comprend des moyens de mise en forme des porteuses, comprenant :

- un premier filtre prototype filtrant les porteuses portant lesdits éléments de données à valeur complexe correspondant auxdits symboles de préambule, permettant de mettre en forme lesdits symboles de préambule, et
- un deuxième filtre prototype, distinct dudit premier filtre prototype, filtrant les porteuses portant lesdits éléments de données à valeur réelle correspondant auxdits symboles de données, permettant de mettre en forme lesdits symboles de données.

Un tel dispositif d'émission est notamment adapté à mettre en oeuvre le procédé d'émission décrit précédemment. Il s'agit par exemple de l'émetteur d'une paire émission-réception ou d'un modem PLC.

Ce dispositif pourra bien sûr comporter les différentes caractéristiques relatives au procédé d'émission selon l'invention.

L'invention concerne aussi un signal à porteuses multiples formé d'une succession temporelle de symboles multiporteuses, comprenant :

- au moins un préambule formé d'au moins trois symboles multiporteuses consécutifs, dits symboles de préambule, portant des éléments de données à valeur complexe associés chacun à une porteuse dudit signal, et
- des symboles multiporteuses, dits symboles de données, portant des éléments de données à valeur réelle associés chacun à une porteuse dudit signal.

Selon l'invention, les porteuses portant les éléments de données à valeur complexe correspondant aux symboles de préambule d'un tel signal sont mises en forme par un premier filtre prototype, et les porteuses portant les éléments de données à valeur réelle correspondant aux symboles de données sont mises en forme par un deuxième filtre prototype, distinct du premier filtre prototype.

Un tel signal peut notamment être émis par le procédé d'émission décrit ci-dessus. Ce signal pourra bien sûr comporter les différentes caractéristiques relatives au procédé d'émission selon l'invention.

Un autre aspect de l'invention concerne un procédé de réception d'un signal à porteuses multiples formé d'une succession temporelle de symboles multiporteuses, comprenant à l'émission :

- au moins un préambule formé d'au moins trois symboles multiporteuses consécutifs, dits symboles de préambule, portant des éléments de données à valeur complexe associés chacun à une porteuse dudit signal, et
- des symboles multiporteuses, dits symboles de données, portant des éléments de données à valeur réelle associés chacun à une porteuse dudit signal.

Selon l'invention, un tel procédé de réception comprend une étape de mise en forme des porteuses reçues, mettant en oeuvre :

- un filtrage des porteuses reçues associées aux symboles de préambule par un premier filtre prototype, et
- un filtrage des porteuses reçues associées aux symboles de données par un deuxième filtre prototype, distinct dudit premier filtre prototype.

On note que du fait du passage dans le canal de transmission, les éléments de données subissent des interférences (intra porteuse et ou inter porteuses). Ainsi, les éléments de données qui présentaient une valeur réelle côté émission peuvent présenter une valeur complexe côté réception.

Un tel procédé de réception est notamment adapté à recevoir un signal à porteuses multiples émis selon le procédé d'émission décrit ci-dessus.

Les caractéristiques et avantages de ce procédé de réception sont les mêmes que ceux du procédé d'émission. Par conséquent, ils ne sont pas détaillés plus amplement.

En particulier, le premier filtre prototype mis en oeuvre en réception est identique au premier filtre prototype mis en oeuvre en émission. En effet, pour pouvoir réaliser l'estimation de canal, le récepteur doit connaître parfaitement les valeurs et emplacements des éléments de données des symboles de préambule.

Le deuxième filtre prototype mis en oeuvre en réception n'est quant à lui pas nécessairement identique au deuxième filtre prototype mis en oeuvre en émission.

L'invention concerne ainsi aussi la construction des filtres prototypes implantés dans les émetteurs ou les récepteurs.

Un autre aspect de l'invention concerne un programme d'ordinateur comportant des instructions pour la mise en oeuvre du procédé de réception tel que décrit ci-dessus, lorsque ledit programme est exécuté par un processeur.

On note en effet que le procédé selon l'invention peut être mis en oeuvre de diverses manières, notamment sous forme câblée ou sous forme logicielle.

Dans un autre mode de réalisation, l'invention concerne un dispositif de réception d'un signal à porteuses multiples formé d'une succession temporelle de symboles multiporteuses, comprenant à l'émission :

- au moins un préambule formé d'au moins trois symboles multiporteuses consécutifs, dits symboles de préambule, portant des éléments de données à valeur complexe associés chacun à une porteuse du signal, et
- des symboles multiporteuses, dits symboles de données, portant des éléments de données à valeur réelle associés chacun à une porteuse du signal.

Selon l'invention, un tel dispositif de réception comprend des moyens de mise en forme des porteuses reçues, mettant en oeuvre :

- un premier filtre prototype filtrant les porteuses reçues associées aux symboles de préambule, et
- un deuxième filtre prototype, distinct du premier filtre prototype, filtrant les porteuses reçues associées aux symboles de données.

Un tel dispositif de réception est notamment adapté à mettre en oeuvre le procédé de réception décrit précédemment. Il s'agit par exemple du récepteur d'une paire émission-réception ou d'un modem PLC, d'un boîtier décodeur (« set top box »), etc.

Ce dispositif pourra bien sûr comporter les différentes caractéristiques relatives au procédé de réception selon l'invention.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, décrite en relation avec l'art antérieur, illustre une structure de préambule particulière ;
- les figures 2A et 2B présentent les principales étapes mises en oeuvre pour une émission OFDM/OQAM mettant en oeuvre deux fonctions prototypes distinctes, selon un mode de réalisation de l'invention ;

- la figure 3 illustre la structure d'un signal multiporteuse selon l'invention ;
- la figure 4 présente les principales étapes mises en oeuvre pour une réception OFDM/OQAM mettant en oeuvre deux fonctions prototypes distinctes, selon un mode de réalisation de l'invention ;
- les figures 5A à 5C illustrent la réponse impulsionnelle du filtre prototype $g[k]$ ou $g^2[k]$ pour différentes valeurs du paramètre de résolution temporelle $T_r$, ainsi que les masques d'interférence associés ;
- la figure 6 illustre la sélection d'un filtre prototype présentant un paramètre de résolution temporelle optimal ;
- la figure 7 illustre les performances de l'invention par rapport aux solutions de l'art antérieur et à la solution idéale, pour un terme de phase $\phi_0 = 0$ ;
- les figures 8 et 9 présentent respectivement la structure d'un dispositif d'émission et d'un dispositif de réception mettant en oeuvre deux filtrages prototypes distincts selon un mode de réalisation particulier de l'invention.

## 5. Description d'un mode de réalisation de l'invention

### 5.1 Principe général

Le principe général de l'invention repose sur une mise en forme spécifique des porteuses d'un signal à porteuses multiples comprenant au moins un préambule, formé d'au moins trois symboles de préambule, et des symboles de données. Un tel préambule est par exemple placé en début de trame, une trame étant constituée d'au moins un symbole de préambule et d'un ensemble de symboles de données.

Cette mise en forme spécifique des porteuses consiste à appliquer un filtre prototype (pour un signal discret), ou une fonction prototype (pour un signal continu), distinct aux porteuses correspondant aux symboles de préambule et aux symboles de données. Ces filtres prototypes peuvent être implantés dans un émetteur et dans un récepteur correspondant.

Ainsi, on utilise selon l'invention un premier filtre prototype (ou fonction prototype) dédié uniquement à la transmission du préambule (symboles de préambule), qui n'est pas nécessairement orthogonal, et qui permette d'accroître le niveau d'interférence produit en réception par rapport aux techniques de l'art antérieur.

Un deuxième filtre prototype (ou fonction prototype) est utilisé pour la transmission des données utiles (symboles de données), qui est quant à lui orthogonal, et qui permet une meilleure localisation fréquentielle des symboles de données du signal multiporteuse.

L'utilisation de ces deux filtres prototypes distincts permet notamment d'améliorer l'estimation du canal de transmission, et donc d'améliorer les gains de transmission.

### 5.2 Applications aux modulation OFDM/OQAM

On décrit ci-après un exemple de mise en oeuvre de l'invention dans le cadre d'une modulation OFDM/OQAM, pour laquelle les symboles de préambule sont insérés en sortie d'une étape de modulation. On note que ces symboles de préambule pourraient également être insérés dans le signal avant l'étape de modulation. Bien entendu, l'invention s'applique à tout système de transmission mettant en oeuvre une modulation à porteuses multiples pour laquelle les porteuses sont mises en forme par une fonction prototype, et une estimation du canal par préambule.

Plus précisément, comme illustré en figure 2A, le procédé d'émission selon un mode de réalisation particulier de l'invention comprend une étape de modulation OFDM/OQAM classique, permettant de délivrer un signal à porteuse multiples $s'[k]$ comprenant un ensemble de symboles de données, à partir de données utiles initiales sous forme binaire, notées *b*.

Par exemple, cette étape de modulation 21 comprend les opérations usuelles de transformation des données utiles *b* en éléments de données à valeur complexe, décomposition des éléments de données à valeur complexe en éléments de données à valeur réelle $a_{m,n}$ (correspondant aux composantes réelles et imaginaires de l'élément de données à valeur complexe), correction de phase et d'amplitude (mettant en oeuvre une multiplication complexe permettant de prendre en compte un terme de phase spécifique et la longueur du filtre prototype utilisé pour les données utiles, noté deuxième filtre prototype), passage du domaine fréquentiel au domaine temporel au moyen d'une transformée de Fourier inverse, implémentation du deuxième filtre prototype sous sa forme dite polyphase.

En d'autres termes, les porteuses portant les éléments de données à valeur réelle $a_{m,n}$, correspondant à des symboles de données, sont mises en forme par le deuxième filtre prototype.

Par exemple, la deuxième fonction prototype est la fonction IOTA, ou la fonction TFL, ou tout autre fonction prototype présentant des propriétés d'orthogonalité.

Après une conversion parallèle/série, on obtient en sortie du modulateur le signal OFDM/OQAM, noté $s'[k]$ sous forme discrète, ou $s'(t)$ sous forme continue après passage dans un convertisseur numérique analogique.

Le procédé d'émission selon un mode de réalisation particulier de l'invention comprend également une étape 22 d'insertion d'un préambule. Classiquement, un tel préambule est inséré dans une trame, avant les symboles de données.

Un tel préambule est formé d'au moins trois symboles de préambule, portant chacun des éléments de données à valeur complexe (par complexe, on entend ici également à valeur purement réelle ou purement imaginaire). Les porteuses portant les éléments de données à valeur complexe $c_{m,n}$, correspondant à ces symboles de préambule, sont mises en forme par un premier filtre prototype, distinct du deuxième filtre prototype.

Par exemple, ce premier filtre prototype $g[k]$, encore appelé filtre de Doroslovacki modifié, prend la forme discrète suivante :

$$g[k] = \frac{F(0)}{2^K} \frac{\Gamma(K+1)}{\Gamma(K/2+1-k\cdot T_r)\Gamma(K/2+1+k\cdot T_r)}$$

avec :

- $K = L_g - 1$, avec $L_g$ la longueur du premier filtre prototype ;
- $F(0)$ une constante ;
- $\Gamma(\cdot)$ la fonction gamma ; et
- $T_r$ un paramètre de résolution temporelle.

Un tel filtre utilisé pour la transmission du préambule n'est pas nécessairement orthogonal.

On note $s[k]$ le signal à porteuses multiples sous forme discrète (ou $s(t)$ sous forme continue) obtenu après insertion du préambule.

La figure 2B illustre un autre exemple de mise en oeuvre du procédé d'émission selon un mode de réalisation particulier de l'invention.

On considère ainsi un modulateur OFDM/OQAM 23, permettant de délivrer un signal à porteuses multiples $s[k]$ formé de symboles multiporteuses de durée $\tau_0$. Par exemple, une trame d'un tel signal $s[k]$ comprend trois symboles de préambule sur les trois premières périodes ($[0,3\tau_0]$) et des symboles de données sur les périodes suivantes ($[4\tau_0,...]$).

Le modulateur OFDM/OQAM 23 met en oeuvre les étapes classiques de transformation de Fourier inverse et de filtrage prototype.

Toutefois, selon l'invention, les coefficients du filtre prototype d'un tel modulateur OFDM/OQAM sont :

- soit ceux d'un premier filtre prototype $F_1$ quelconque, par exemple un filtre de Doroslovački modifié, permettant de mettre en forme les trois symboles de préambule sur les trois premières périodes ($[0,3\tau_0]$) à partir de données de préambule *p*,
- soit ceux d'un deuxième filtre prototype $F_2$ orthogonal, par exemple un filtre IOTA ou TFL, permettant de mettre en forme les symboles de données sur les périodes suivantes ($[4\tau_0,...]$) à partir des données utiles *b*.

Un tel modulateur OFDM/OQAM permet donc de basculer d'un premier filtre $F_1$ à un deuxième filtre $F_2$ (puis éventuellement de rebasculer vers le premier filtre et ainsi de suite, si plusieurs préambules sont insérés dans le signal à porteuses multiples) pour moduler d'une part les données de préambule *p* et d'autre part les données utiles *b*.

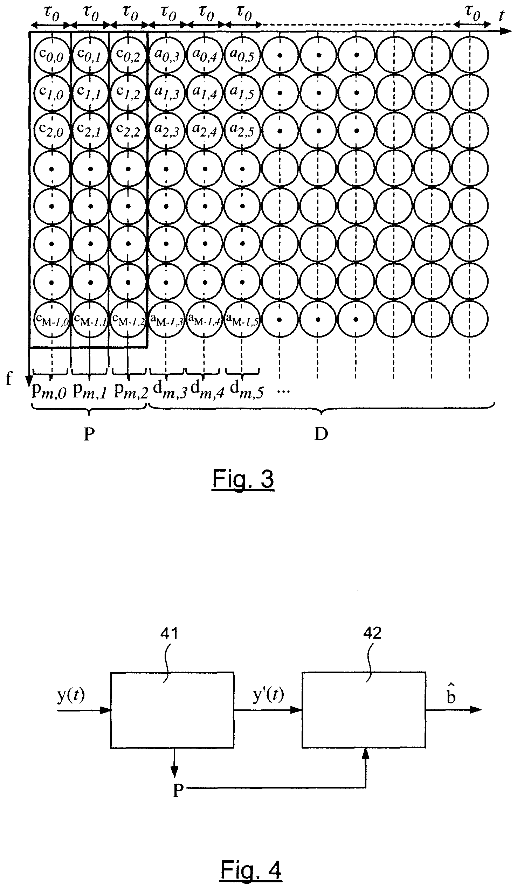

La figure 3 illustre plus précisément la structure d'une trame du signal $s'[k]$ comprenant une succession temporelle de symboles multiporteuses présentant chacun une durée $\tau_0$, comprenant :

- au moins un préambule P, formé d'au moins trois symboles de préambule $p_{m,0}$, $p_{m,1}$, $p_{m,2}$ comprenant des éléments de données à valeur complexe $c_{m,n}$, associés chacun à une porteuse du signal, et
- des données D comprenant des symboles de données $d_{m,3}$, $d_{m,4}$, $d_{m,5}$, etc, comprenant des éléments de données à valeur réelle $a_{m,n}$ associés chacun à une porteuse du signal,

où l'indice $m$ correspond à l'indice fréquentiel de la porteuse, et l'indice $n$ l'indice temporel.

Les éléments de données des symboles de préambule sont encore appelés pilotes, leurs valeur et emplacement à l'émission étant connus d'au moins un récepteur destiné à effectuer une réception du signal à porteuses multiples. On rappelle en effet que dans le cadre d'une estimation par préambule, le récepteur doit connaître exactement le contenu du préambule, c'est-à-dire la position des pilotes dans l'espace temps/fréquence et leur valeur.

Des étapes sensiblement identiques sont mises en oeuvre côté réception.

Plus précisément, comme illustré en figure 4, le procédé de réception selon un mode de réalisation particulier de l'invention comprend, à réception du signal multiporteuse après passage dans le canal de transmission, noté $y(t)$, une étape d'extraction 41 du préambule P, permettant de séparer les symboles de préambule reçus des symboles de données reçus.

Les symboles de préambule reçus sont alors de nouveau mis en forme par le premier filtre prototype. En d'autres termes, les filtres prototypes utilisés pour la transmission du préambule (appliqués aux symboles de préambule), et donc pour la partie estimation de canal, sont identiques à l'émission et à la réception.

Les symboles de données reçus subissent quant à eux un traitement différent. Plus précisément, selon ce mode de réalisation particulier, le procédé de réception comprend une étape 42 de démodulation OFDM/OQAM classique, mettant en oeuvre une estimation du canal de transmission à partir du préambule P, et permettant d'obtenir une estimation des données utiles initiales sous forme binaire, notées $\hat{b}$, à partir des symboles de données reçus et de l'estimation du canal de transmission.

Par exemple, cette étape de démodulation 42 comprend les opérations usuelles d'estimation du canal de transmission à partir du préambule P, filtrage des symboles de données reçus par la deuxième fonction prototype, passage du domaine temporel au domaine fréquentiel au moyen d'une transformée de Fourier directe, correction de phase et d'amplitude (mettant en oeuvre une multiplication complexe permettant de prendre en compte un terme de phase spécifique et la longueur du deuxième filtre prototype), extraction de la partie réelle et recombinaison des données réelles par deux, pour former une donnée complexe, et reconstruire les données utiles $\hat{b}$.

On rappelle que lors d'une estimation de canal en OFDM/OQAM par un préambule, l'émetteur et le récepteur connaissent les éléments de données du préambule (pilotes) et le filtre prototype utilisé en émission, et via l'équation permettant d'approximer la composante imaginaire correspondant à l'interférence obtenue à un emplacement temps/fré-

$$a_{m_0,n_0}^{(i)} \approx \sum_{(p,q)\in\Omega_{1,1}^*} a_{m_0+p,n_0+q} \langle g \rangle_{m_0+p,n_0+q}^{m_0,n_0}$$

quence (par exemple comme décrit en relation avec l'art antérieur), il est possible au récepteur d'obtenir une estimée du canal de transmission. Une technique d'estimation du canal par préambule est notamment décrite dans le document WO2008/007019 précité.

Le canal peut ainsi être estimé sur chacune des porteuses du multiplex. Le choix des paramètres du système (durée symbole, longueur de trame, etc...) assure que le canal varie lentement par rapport au temps symbole $\tau_0$. On suppose alors le canal quasi-constant sur une trame (où une trame étant constituée d'au moins un symbole de préambule et d'un ensemble de symboles de données). On peut donc utiliser l'estimée du canal déterminée pour le ou les symboles de préambule pour l'ensemble des symboles de données de la trame.

On note que selon ce mode de réalisation, les filtres prototypes utilisés pour la transmission des données (appliqués aux symboles de données), et donc pour la partie charge utile, sont identiques à l'émission et à la réception, par exemple dans le cas d'une transmission OFDM/OQAM mettant en oeuvre un filtre à phase linéaire. Toutefois, cette caractéristique n'est pas obligatoire, et les filtres utilisés en émission et en réception pour la charge utile peuvent être différents, par exemple dans le cas d'une transmission BFDM/OQAM.

Finalement, comme déjà illustré côté émission, les étapes de filtrage polyphase et de transformation de Fourier peuvent êtres mises en oeuvre dans un démodulateur OFDM/OQAM.

Selon l'invention, les coefficients du filtre prototype d'un tel démodulateur OFDM/OQAM sont soit ceux d'un premier filtre prototype $F_1$ quelconque (par exemple un filtre de Doroslovački modifié) permettant de remettre en forme les trois symboles de préambule sur les trois premières périodes ($[0,3\tau_0]$), soit ceux d'un deuxième filtre prototype $F_2$ orthogonal (par exemple un filtre IOTA ou TFL), permettant de remettre en forme les symboles de données sur les périodes suivantes ($[4\tau_0,...]$).

Un tel démodulateur OFDM/OQAM permet donc de basculer d'un premier filtre $F_1$ à un deuxième filtre $F_2$ (puis éventuellement de rebasculer vers le premier filtre et ainsi de suite, si plusieurs préambules sont insérés dans le signal à porteuses multiples) pour démoduler d'une part les symboles de préambule et d'autre part les symboles de données.

### 5.3 Construction du premier filtre prototype

On présente ci-après un mode de réalisation particulier pour la détermination d'une fonction prototype bien adaptée aux modulations OFDM/OQAM.

On considère, selon ce mode de réalisation particulier, un préambule présentant la structure particulière IAM1 telle que décrite en relation avec l'art antérieur et illustrée en figure 1.

Plus précisément, un préambule selon cet exemple est formé de deux symboles d'extrémité formés d'éléments de données portant chacun une valeur nulle et d'un symbole central formé de pilotes $p_i$ portant une valeur égale à 1 ou -1, avec $i \in [0,M\text{-}1]$ l'indice de la porteuse associée au pilote $p_i$ et $M$ le nombre de porteuses associées au symbole central, tel que, pour $k = 0,...,M/4\text{-}1$ :

- $p_{4k} = p_{4k+1} = 1$ et
- $p_{4k+2} = p_{4k+3} = -1$.

Un tel préambule présente donc une durée de $3\tau_0$.

Les équations présentées en relation avec l'art antérieur s'appliquent donc de nouveau.

On note que d'autres structures de préambule peuvent également être utilisées selon l'invention, comme celles proposées dans le document « *2 db better than CP-OFDM with OFDM/OQAM for preamble-based channel estimation* » précité.

En particulier, on note qu'il est possible d'utiliser de séquences de préambule comprenant des pilotes à valeur imaginaire pure. En effet, la stricte orthogonalité, ou bi-orthogonalité, des symboles de préambule n'est pas une condition indispensable pour réaliser une estimation correcte du canal de transmission.

Le document « Product of second moments in time and frequency for discretetime signals and the uncertainty limit » précité de M. I. Doroslovacki proposait un filtre discret optimal du point de vue de la localisation temps/fréqunce, sous la forme :

$$\gamma[k] = \frac{F(0)}{2^K} \frac{\Gamma(K+1)}{\Gamma(K/2+1-k)\Gamma(K/2+1+k)}$$

pour n'importe quel valeur de $K$, telle que $K > 1/2$, où :

- $F(0)$ est une constante, par exemple égale à 1 ;
- $\Gamma(\cdot)$ est la fonction gamma.

Selon ce document, ce filtre à temps discret tend vers la fonction gaussienne lorsque $K \to +\infty$. De plus, ce filtre permet d'atteindre la borne supérieure de localisation temps-fréquence ($\xi$=1).

On propose selon ce mode de réalisation particulier de modifier ce filtre classique pour obtenir le filtre prototype utilisé pour la transmission du préambule, également appelé premier filtre prototype. On se place dans le cas où $K = L_g$ -1, avec $L_g$ la longueur du premier filtre prototype.

Afin d'éviter des interférences avec la charge utile à transmettre (symboles de données), on pose $L_g = M$, avec $M$ le nombre de porteuses par symbole multiporteuse. On introduit également un paramètre de résolution temporelle $T_r$, de façon à obtenir le premier filtre prototype :

$$g[k] = \frac{F(0)}{2^K} \frac{\Gamma(K+1)}{\Gamma(K/2+1-k \cdot T_r)\Gamma(K/2+1+k \cdot T_r)}$$

L'utilisation d'un tel paramètre de résolution temporelle $T_r$ permet notamment de pondérer la localisation temporelle et la localisation fréquentielle du filtre prototype. En d'autres termes, ce paramètre $T_r$ permet de modifier la résolution temporelle et de privilégier soit la localisation temporelle, soit la localisation fréquentielle.

Ainsi, pour $T_r = 1$, on retrouve le filtre conventionnel de Doroslovacki.

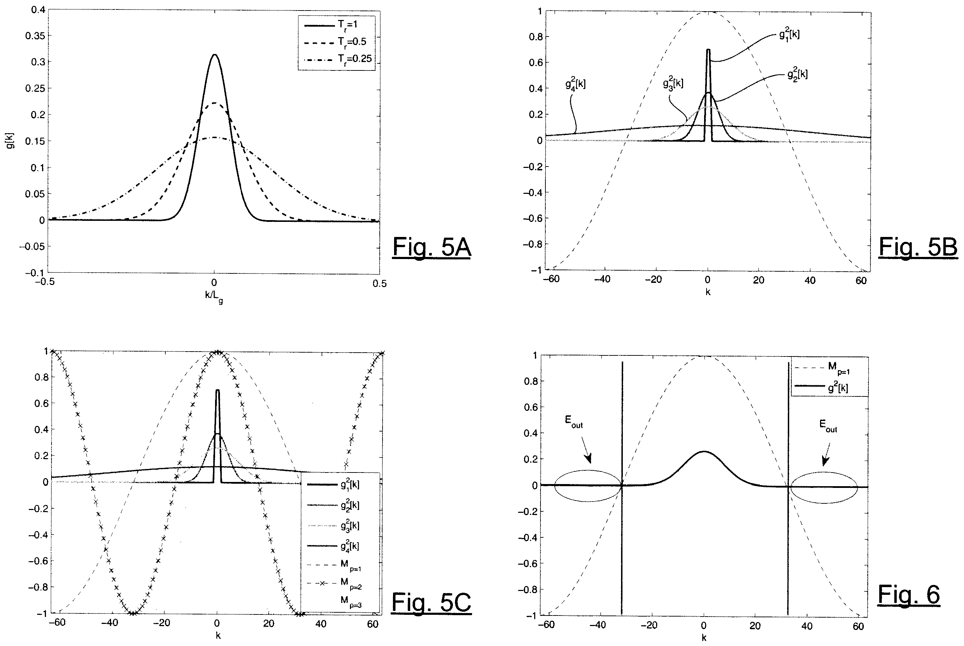

En faisant décroître $T_r$ ($T_r < 1$) le moment d'ordre 2 en temps $m_2$ va croître, mais le moment d'ordre 2 en fréquence $M_2$ va décroître. La figure 5A illustre ainsi la réponse impulsionnelle du filtre prototype $g[k]$ pour différentes valeurs du paramètre de résolution temporelle $T_r$.

On cherche alors à trouver la valeur optimale du paramètre de résolution temporelle $T_r$ du premier filtre prototype permettant d'optimiser un premier paramètre $\beta_0$. Le paramètre de résolution temporelle $T_r$ permet notamment de pondérer la nécessité de bonne localisation temps/fréquence et celle d'obtenir de fortes valeurs de $\beta_0$.

En d'autres termes, on cherche un filtre prototype dédié uniquement à la transmission du préambule qui s'approche du filtre prototype idéal pour effectuer une estimation correcte par préambule en OFDM/OQAM. D'un point de vue mathématique, cela revient à trouver une fonction de support le plus court possible (ce afin d'éviter de créer des interférences avec les données utiles), et dont un paramètre noté $\beta_0$, lié à la fonction d'ambiguïté, est le plus grand possible.

En exprimant ce premier paramètre $\beta_0$ en fonction du filtre prototype $g[k]$, on obtient :

$$\langle g \rangle_{m+1,1}^{m,1} = \sum_{k\in\mathbb{Z}} g_{m,1}[k] g_{m+1,1}^*[k] = jA_g[0,1]$$

où * correspond à l'opérateur conjugué et $A_g[\tau,\mu]$ est la fonction d'ambiguïté donnée par :

$$A_g[\tau,\mu] = \sum_{k\in\mathbb{Z}} g[k+\tau/2]g^*[k-\tau/2]e^{j2\pi\frac{\mu k}{M}}$$

De ce fait, Ag [0,1] peut également s'écrire comme :

$$A_g[0,1] = \sum_{k\in\mathbb{Z}} g^2[k]e^{j2\pi\frac{k}{M}} = \sum_{k\in\mathbb{Z}} g^2[k]\cos\left(2\pi\frac{k}{M}\right)$$

si l'on considère que la fonction prototype associée au filtre $g[k]$ est une fonction réelle et paire.

En choisissant une longueur de filtre égale à $M$, il est possible d'exprimer le premier paramètre $\beta_0$ par :

$$\beta_0 = \left| jA_g[0,1] \right| = \left| \sum_k g^2[k]\cos\left(2\pi\frac{k}{M}\right) \right|.$$

On cherche alors à maximiser ce premier paramètre $\beta_0$, ce qui revient à maximiser le terme

$$\left| \sum_k g^2[k]\cos\left(2\pi\frac{k}{M}\right) \right|.$$ En outre, comme la longueur du filtre prototype est égale à $M$, le terme $\cos\left(2\pi\frac{k}{M}\right)$ correspond à une période du masque en cosinus, illustré en trait pointillés en figure 5B pour $p$=1.

Plus précisément, la figure 5B illustre quatre instances, notées $g_i^2[k]$, du carré du filtre prototype $g^2[k]$, c'est-à-dire différentes formes possibles du carré du filtre prototype $g^2[k]$ suivant la valeur du paramètre de résolution temporelle $T_r$. Par exemple, la fonction $g_1^2[k]$ correspond au carré du filtre conventionnel de Doroslovac̆ki pour lequel $T_r$ = 1. Les fonctions $g_2^2[k], g_3^2[k]$ et $g_4^2[k]$ correspondent au carré de filtres de Doroslovacki modifiés pour différents paramètres de résolution temporelle $Tr$, choisis quasi arbitrairement, de façon à vérifier $Tr\left(g_1^2[k]\right) > Tr\left(g_2^2[k]\right) > Tr\left(g_3^2[k]\right) > Tr\left(g_4^2[k]\right).$ Par exemple $Tr\left(g_2^2[k]\right) = 0,5$, $Tr\left(g_3^2[k]\right) = 0,25$, et $Tr\left(g_4^2[k]\right) = 0,125$.

Cette figure 5B permet de visualiser l'impact d'un étalement plus ou moins grand de la fonction prototype $g$ sur

le premier paramètre $\beta_0$, qui correspond à la somme des produits de $g^2[k]$ et $\cos\left(2\pi\dfrac{k}{M}\right)$.

Si l'on choisit la fonction $g_1^2[k]$ pour le premier filtre prototype, on constate qu'on obtient une valeur maximale du premier paramètre $\beta_0$, car toute l'énergie de la réponse impulsionnelle du filtre est concentrée à la proximité du pic du masque en cosinus (en traits pointillés). Au contraire, si l'énergie se disperse davantage en fonction de l'indice $k$, la valeur du premier paramètre $\beta_0$ va tendre à décroître. Dans le cas extrême de la fonction $g_4^2[k]$, l'énergie de la réponse impulsionnelle du filtre atteint même la zone négative du masque en cosinus, ce qui a pour effet de réduire nettement la valeur du premier paramètre $\beta_0$.

Toutefois, si l'on choisit une fonction $g^2[k]$ aussi étroite que possible, on accroît fortement l'interférence. Or si l'interférence devient trop importante alors l'approximation $b_{m,1} \approx p_{m,1} + j\left(2p_{m+1,1}\langle g\rangle_{m+1,1}^{m,1}\right)$, telle qu'introduite en relation avec l'art antérieur, n'est plus valable.

On note que le terme d'interférence est prédominant sur l'axe fréquentiel. Il est donc en relation $\langle g\rangle_{m+p,1}^{m,1}$ pour $|p| > 1$.

Après calculs, on obtient $\langle g\rangle_{m+p,1}^{m,1} = j^P A_g[0,p]$, avec $j^2 = -1$.

On introduit également un deuxième paramètre, noté $\beta_I$, correspondant à l'interférence, et tel que :

$$\beta_I = \left|\sum_p j^P A_g[0,p]\right| = \left|\sum_p j^P \sum_k g^2[k]\cos\left(2\pi\frac{pk}{M}\right)\right|$$

pour $p = \pm 2, \pm 3, ....$

De la même façon que pour le premier paramètre $\beta_0$, on obtient un masque d'interférence $\cos\left(2\pi\dfrac{pk}{M}\right)$.
La figure 5C reprend les courbes de la figure 5B, ainsi que des exemples de disposition de ce masque en cosinus pour différentes valeurs de $p$ : $M_{p=1}, M_{p=2}$ et $M_{p=3}$.

Il est clair que si le carré de la fonction prototype $g^2[k]$ présente une forme étroite comme $g_1^2[k]$, on maximise effectivement le premier paramètre $\beta_0$, mais on maximise en même temps le deuxième paramètre d'interférence $\beta_I$.

En conséquence, même en amplifiant ou « boostant » au maximum la puissance du « pseudo-pilote », il n'est pas possible d'obtenir une bonne estimation du canal de transmission car l'approximation précitée $b_{m,1} \approx p_{m,1} + j\left(2p_{m+1,1}\langle g\rangle_{m+1,1}^{m,1}\right)$ n'est pas valable.

D'un autre côté, si on choisit de minimiser le deuxième paramètre d'interférence $\beta_I$, en étalant l'énergie du filtre sur une plage d'indices $k$ plus importante, la valeur du premier paramètre $\beta_0$ décroît aussi. Il est donc nécessaire de trouver un bon compromis pour le paramètre de résolution temporelle $T_r$.

Pour garder une valeur le premier paramètre $\beta_0$ suffisamment élevée, il est nécessaire de garder la majeure partie de l'énergie du carré de la fonction prototype $g^2[k]$ dans la zone positive du masque en cosinus pour $p = 1$ (noté $M_{p=1}$), comme illustré en figure 5C. On peut en même temps étaler suffisamment le carré de la fonction prototype $g^2[k]$. Compte tenu que le masque en cosinus pour le deuxième paramètre $\beta_I$ devient plus dense, ce qui signifie qu'il y a plus de périodes de cosinus dans le masque, ses parties négatives auront pour effet de réduire le deuxième paramètre $\beta_I$.

En résumé, la détermination du filtre prototype utilisé pour la transmission du préambule consiste à chercher un paramètre de résolution temporelle $T_r$ permettant d'obtenir un filtre prototype bien localisé en temps et fréquence, où les premier et deuxième paramètres $\beta_0$ et $\beta_I$ peuvent être vus comme ses paramètres de localisation.

Comme déjà indiqué, le filtre de Doroslovački est optimal selon le critère de localisation temps/fréquence. On cherche donc à modifier ce filtre en déterminant un paramètre de résolution temporelle $T_r$ permettant d'obtenir un bon compromis entre les premier et deuxième paramètres $\beta_0$ et $\beta_I$.

Selon une première variante, encore appelée critère MOE pour « Maximum Outside Energy » (ou maximisation de l'énergie en dehors de la partie positive du masque, pour $p = 1$), on cherche à maximiser le premier paramètre $\beta_0$ et à minimiser le deuxième paramètre $\beta_I$.

Plus précisément, on cherche à obtenir une fonction $g^2[k]$ aussi étroite que possible, mais aussi la plus étalée, de façon à garder la majeure partie de l'énergie de la fonction $g^2[k]$ dans la zone positive du masque en cosinus pour $p = 1$ (noté $M_{p=1}$).

Comme illustré en figure 6, la fonction $g_3^2[k]$ remplit ces conditions. Sur cette figure 6, la variable $E_{out}$ correspond à l'énergie en dehors de la partie positive du masque en cosinus pour $p = 1$ ($M_{p=1}$).

Par exemple, le paramètre de résolution temporelle $T_r$ selon cette première variante est obtenu en mettant en oeuvre l'algorithme décrit ci-après. Cet algorithme est initialisé en posant $T_r = 1$, puis on fait décroître la valeur du paramètre de résolution temporelle $T_r$ jusqu'à ce que la valeur de la variable $E_{out}$ soit en dessous d'un seuil prédéterminé.

A l'initialisation, on pose $T_r = 1$, $\delta = \dfrac{1}{M}$, $\varepsilon = 10^{-3}$ et $\xi_T = 10^{-3}$, avec :

- $\delta$ un pas de décrémentation du paramètre de résolution temporelle ;
- $\varepsilon$ un seuil correspondant à la valeur maximale d'énergie tolérée en dehors de la partie positive du masque $M_{p=1}$ ;
- $\xi_T$ un paramètre de localisation temps-fréquence.

On génère ensuite un filtre noté $MD_{T_r}$ tel que :

$$\frac{F(0)}{2^K} \frac{\Gamma(K+1)}{\Gamma(K/2+1-k \cdot T_r)\Gamma(K/2+1+k \cdot T_r)}, \text{ avec } T_r = 1.$$

Tant que $E_{out}(MD_{T_r}) < \varepsilon$, on effectue les étapes suivantes :

- $T_r = T_r - \delta$ ;
- génération du filtre $MD_{T_r}$ avec $T_r = T_r - \delta$ ;
- si $1 - \xi(MDT_r) > \xi_T$ :

    ◦ alors $T_r = T_r + \delta$ et on arrête l'algorithme.

Selon une deuxième variante, encore appelée critère MWC $\beta$ pour « Maximum Weighted Combining $\beta$ » (ou maximisation d'une combinaison pondérée des $\beta$), on cherche à déterminer la valeur du paramètre de résolution temporelle $T_r$ qui maximise une combinaison linéaire des premier paramètre $\beta_0$ et deuxième paramètre $\beta_I$.

On cherche alors à résoudre le problème de maximisation suivant :

$$\max_{T_r} \{ w\beta_0 - (1-w)\beta_I \}, \text{ avec la contrainte } \xi(T_r) \in \, ]1 - \xi_T, 1]$$

où w est un facteur de pondération des premier et deuxième paramètres $\beta_0$ et $\beta_I$, tel que $0 \le w \le 1$.

La valeur du paramètre de pondération w peut être déterminée par simulation, de manière à obtenir le taux d'erreur le plus faible. L'expérience montre que $w = 0{,}95$ donne des performances quasi-optimales. Toutefois, des choix d'initialisation très différents donnent également des bons résultats.

Pour ce problème de maximisation, le paramètre d'initialisation du critère, noté $\Delta_{max}$, peut être choisi à une valeur négative arbitrairement élevée.

Par exemple, le paramètre de résolution temporelle $T_r$ selon cette deuxième variante est obtenu en mettant en oeuvre l'algorithme décrit ci-après.

A l'initialisation, on pose $T_r = 1$, $\delta = \dfrac{1}{M}$, $w = 0{,}95$, $\xi_T = 10^{-3}$, et $\Delta^{max}$ une valeur négative arbitrairement grande, par exemple $\Delta^{max} = -10^3$.

On génère ensuite un filtre noté $MD_{T_r}$, tel que : $\dfrac{F(0)}{2^K}\dfrac{\Gamma(K+1)}{\Gamma(K/2+1-k\cdot T_r)\Gamma(K/2+1+k\cdot T_r)}$, avec $T_r$=1.

Tant que $w\beta_0(MD_{T_r})-(1-w)\beta_l(MD_{T_r})>\Delta_{\max}$, on effectue les étapes suivantes :

- $\Delta_{\max} = w\beta_0(MD_{T_r})-(1-w)\beta_l(MD_{T_r})$
- $T_r = T_r - \delta$ ;
- génération du filtre $MD_{T_r}$ avec $T_r = T_r - \delta$ ;
- si $1-\xi(MD_{T_r})>\xi_T$ :

    o alors $T_r = T_r + \delta$ et on arrête l'algorithme.

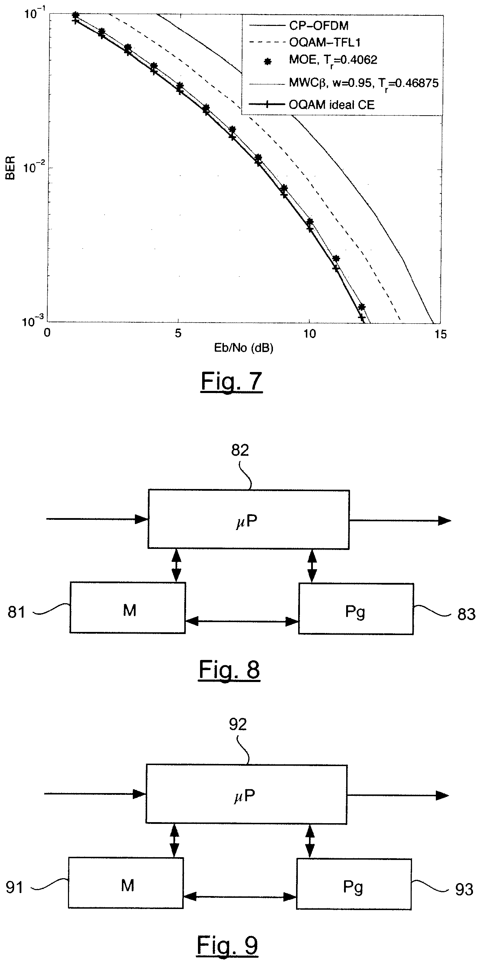

On présente finalement, en relation avec la figure 7, des résultats de simulation, permettant de comparer les performances de différents systèmes de transmission selon l'art antérieur et selon l'invention, en comparant le taux d'erreur binaire (BER) générés par ces systèmes en fonction du rapport $E_b / N_0$ (en dB).

Plus précisément, la figure 7 permet de comparer les performances de :

- deux systèmes de transmission selon l'art antérieur :

    ◦ un système de transmission utilisant une modulation OFDM et un préfixe cyclique, noté CP-OFDM ; et
    ◦ un système OFDM/OQAM utilisant le filtre prototype orthogonal TFL1 tel que défini dans le document « *Preamble-based channel estimation techniques for OFDM/OQAM over the powerline* » précité, à la fois pour le préambule (symboles de préambule) et la charge utile (symboles de données), noté OQAM-TFL1 ;

- deux systèmes de transmission selon l'invention :

    ◦ un système OFDM/OQAM utilisant un premier filtre prototype optimisé selon le critère MOE, pour un paramètre de résolution temporelle $T_r$=0,4062, pour le préambule (symboles de préambule), et un deuxième filtre prototype orthogonal pour la charge utile (symboles de données), noté MOE;
    ◦ un système OFDM/OQAM utilisant un premier filtre prototype optimisé selon le critère MWC $\beta$, pour un facteur de pondération $w$ = 0,95 et un paramètre de résolution temporelle $T_r$ = 0,46875, pour le préambule (symboles de préambule), et un deuxième filtre prototype orthogonal pour la charge utile (symbole de donnée), noté MWC $\beta$ ; et

- un système de transmission OFDM/OQAM présentant une estimation de canal parfaite, noté OQAM idéal CE.

Les systèmes de transmission OFDM/OQAM selon cet exemple de simulation utilisent la structure de préambule IAM1 telle que définie en relation avec l'art antérieur et illustré en figure 1, et un terme de phase du signal OFDM/OQAM égal à zéro ($\phi_0$ = 0).

Les paramètres de simulation sont :

- $M$ = 128, constellation QPSK ;
- pas de codage canal ;
- longueur du préfixe cyclique pour le système de transmission CP-OFDM fixée à $M$ = 8 ;
- modèle de canal CPL tel que décrit dans le document « Performance analysis of ofdm systems for broadband power line communications under impulsive noise and multipath effects » (Y.H. Ma, P.L. So, et E. Gunawan, vol. 20, no. 2, pp. 674-682, Avril 2005).

On constate sur la figure 7 que les deux algorithmes proposés selon l'invention pour déterminer le paramètre de résolution temporelle $T_r$ optimal à utiliser dans le premier filtre prototype (filtre modifié de Doroslovacki) dans les systèmes de transmission MOE et MWC $\beta$ donnent des performances quasi-identiques, et un gain d'environ 1,2 dB par rapport au système de transmission OQAM-TFL1 pour un taux d'erreur de 10$^{-2}$.

Comparé au système de transmission CP-OFDM, le gain est de l'ordre de 3 dB, dont une partie $\left(10\log\dfrac{M+M/8}{M}\approx 0,5\text{dB}\right)$ provient de la non-utilisation d'un préfixe cyclique. De plus, par rapport à une estimation parfaite en OFDM/OQAM, les systèmes de transmission MOE et MWC $\beta$ selon l'invention engendrent une perte en gain de l'ordre de 0,2 dB seulement.

La solution selon l'invention permet donc d'obtenir des performances très proches des performances idéales, et donc d'accroître significativement les gains par rapport aux techniques de l'art antérieur.

### 5.4 Structure des dispositifs d'émission et de réception

On présente finalement, en relation avec les figures 8 et 9, la structure simplifiée d'un dispositif d'émission et d'un dispositif de réception mettant chacun en oeuvre deux filtres prototypes distincts (l'un pour la mise en forme du préambule, l'autre pour la mise en forme de la charge utile) selon les modes de réalisation décrits ci-dessus.

Comme illustré en figure 8, un tel dispositif d'émission comprend une mémoire 81 comprenant une mémoire tampon, une unité de traitement 82, équipée par exemple d'un microprocesseur $\mu$P, et pilotée par le programme d'ordinateur 83, mettant en oeuvre le procédé d'émission selon l'invention.

A l'initialisation, les instructions de code du programme d'ordinateur 83 sont par exemple chargées dans une mémoire RAM avant d'être exécutées par le processeur de l'unité de traitement 82. L'unité de traitement 82 reçoit en entrée des porteuses portant des éléments de données à valeur complexe, correspondant à des symboles de préambule, et des éléments de données à valeur réelle, correspondant à des symboles de données. Le microprocesseur de l'unité de traitement 82 met en oeuvre les étapes du procédé d'émission décrit précédemment, selon les instructions du programme d'ordinateur 83, pour mettre en forme les porteuses du signal multiporteuse. Pour cela, le dispositif d'émission comprend, outre la mémoire tampon 81, des moyens de mise en forme des porteuses, comprenant un premier filtre prototype filtrant les porteuses portant les éléments de données à valeur complexe correspondant aux symboles de préambule, et un deuxième filtre prototype filtrant les porteuses portant les éléments de données à valeur réelle correspondant aux symboles de données. Ces moyens sont pilotés par le microprocesseur de l'unité de traitement 82. L'unité de traitement 82 transmet donc, à destination d'au moins un dispositif de réception, un signal multiporteuse mis en forme.

Comme illustré en figure 9, un tel dispositif de réception comprend quant à lui une mémoire 91 comprenant une mémoire tampon, une unité de traitement 92, équipée par exemple d'un microprocesseur $\mu$P, et pilotée par le programme d'ordinateur 93, mettant en oeuvre le procédé de réception selon l'invention.

A l'initialisation, les instructions de code du programme d'ordinateur 93 sont par exemple chargées dans une mémoire RAM avant d'être exécutées par le processeur de l'unité de traitement 92. L'unité de traitement 92 reçoit en entrée des porteuses ayant subi des interférences, correspondant à des symboles de préambule et des symboles de données d'un signal à porteuses multiples. Le microprocesseur de l'unité de traitement 92 met en oeuvre les étapes du procédé de réception décrit précédemment, selon les instructions du programme d'ordinateur 93, pour mettre en forme les porteuses reçues. Pour cela, le dispositif de réception comprend, outre la mémoire tampon 91, des moyens de mise en forme des porteuses, comprenant un premier filtre prototype filtrant les porteuses reçues associées aux symboles de préambule, et un deuxième filtre prototype filtrant les porteuses reçues associées aux symboles de données. Ces moyens sont pilotés par le microprocesseur de l'unité de traitement 92.

**Revendications**

1. Procédé d'émission d'un signal formé d'une succession temporelle de symboles multiporteuses, modulant chacun une pluralité de porteuses, comprenant :

   - au moins un préambule (P) formé d'au moins trois symboles multiporteuses consécutifs, dits symboles de préambule, et
   - des symboles de données (D),

   **caractérisé en ce que** ledit procédé d'émission comprend une étape de modulation, mettant en oeuvre :

   - un filtrage, par un premier filtre prototype ($F_1$), des porteuses portant des éléments de données à valeur complexe correspondant à des données de préambule, délivrant lesdits symboles de préambule, et
   - un filtrage, par un deuxième filtre prototype ($F_2$) distinct dudit premier filtre prototype, des porteuses portant des éléments de données à valeur réelle correspondant à des données utiles, délivrant lesdits symboles de données.

   les éléments de données à valeur complexe et les éléments de données à valeur réelle étant associés chacun à une porteuse dudit signal,
   ledit premier filtre prototype prenant la forme discrète suivante :

$$g[k] = \frac{F(0)}{2^K} \frac{\Gamma(K+1)}{\Gamma(K/2+1-k\cdot T_r)\Gamma(K/2+1+k\cdot T_r)}$$

avec :

- $K = L_g$ - 1, avec $L_g$ la longueur dudit premier filtre prototype ;
- $F(0)$ une constante ;
- $\Gamma(\cdot)$ la fonction gamma ; et
- $T_r$ un paramètre de résolution temporelle.

2. Procédé d'émission selon la revendication 1, **caractérisé en ce que** ledit préambule comprend deux symboles de préambule d'extrémité ($p_{m,0}$, $p_{m,2}$) constitués d'éléments de données portant une valeur nulle, encadrant au moins un symbole de préambule central ($p_{m,1}$) constitué de pilotes $p_i$ portant une valeur égale à 1 ou -1, avec $i \in [0,M-1]$ l'indice de la porteuse associée au pilote $p_i$ et $M$ le nombre de porteuses associées audit symbole de préambule central, tel que, pour $k = 0,...,M/4-1$ :

- $p_{4k} = p_{4k+1} = 1$ et
- $p_{4k+2} = p_{4k+3} = -1$.

3. Procédé d'émission selon la revendication 1, **caractérisé en ce que** ledit deuxième filtre prototype est un filtre orthogonal ou bi-orthogonal.

4. Procédé d'émission selon la revendication 1, **caractérisé en ce qu'**il comprend une étape de détermination dudit paramètre de résolution temporelle $T_r$ du premier filtre prototype $g[k]$, à partir d'un premier paramètre $\beta_0$ et d'un deuxième paramètre $\beta_I$, tels que :

$$\beta_0 = \left| \sum_k g^2[k]\cos\left(2\pi\frac{k}{M}\right) \right| \quad \text{et}$$

$$\beta_I = \left| \sum_p j^p \sum_k g^2[k]\cos\left(2\pi\frac{pk}{M}\right) \right|,$$

avec $j^2 = -1$, M le nombre de porteuses par symbole multiporteuse et $L_g = M$,
ladite étape de détermination permettant de maximiser ledit premier paramètre $\beta_0$ et/ou de minimiser ledit deuxième paramètre $\beta_I$.

5. Procédé d'émission selon la revendication 1, **caractérisé en ce qu'**il comprend une étape de détermination dudit paramètre de résolution temporelle $T_r$ du premier filtre prototype $g[k]$, à partir d'une combinaison linéaire d'un premier paramètre $\beta_0$ et d'un deuxième paramètre $\beta_I$ égale à $w\beta_0 - (1-w)\beta_I$,
telle que :

- w est un facteur de pondération tel que $0 \leq w \leq 1$ ;

$$\beta_0 = \left| \sum_k g^2[k]\cos\left(2\pi\frac{k}{M}\right) \right| ;$$

$$\beta_I = \left| \sum_p j^p \sum_k g^2[k]\cos\left(2\pi\frac{pk}{M}\right) \right| ;$$

avec $j^2 = -1$, M le nombre de porteuses par symbole multiporteuse et $L_g = M$,
ladite étape de détermination permettant de maximiser ladite combinaison linéaire.

**6.** Procédé de réception d'un signal formé d'une succession temporelle de symboles multiporteuses, modulant chacun une pluralité de porteuses, comprenant à l'émission :

- au moins un préambule (P) formé d'au moins trois symboles multiporteuses consécutifs, dits symboles de préambule, portant des éléments de données à valeur complexe associés chacun à une porteuse dudit signal, correspondant à des données de préambule, et
- des symboles de données (D), portant des éléments de données à valeur réelle associés chacun à une porteuse dudit signal, correspondant à des données utiles,

**caractérisé en ce que** ledit procédé de réception comprend une étape de démodulation des porteuses reçues, mettant en oeuvre :

- un filtrage des porteuses reçues associées aux symboles de préambule par un premier filtre prototype ($F_1$), et
- un filtrage des porteuses reçues associées aux symboles de données par un deuxième filtre prototype ($F_2$), distinct dudit premier filtre prototype,

ledit premier filtre prototype prenant la forme discrète suivante :

$$g[k] = \frac{F(0)}{2^K} \frac{\Gamma(K+1)}{\Gamma(K/2+1-k \cdot T_r)\Gamma(K/2+1+k \cdot T_r)}$$

avec :

- $K = L_g - 1$, avec $L_g$ la longueur dudit premier filtre prototype ;
- $F(0)$ une constante ;
- $\Gamma(\cdot)$ la fonction gamma ; et
- $T_r$ un paramètre de résolution temporelle.

**7.** Programme d'ordinateur comportant des instructions pour la mise en oeuvre du procédé d'émission selon la revendication 1 et/ou du procédé de réception selon la revendication 6, lorsque ledit programme est exécuté par un processeur.

**8.** Dispositif d'émission d'un signal formé d'une succession temporelle de symboles multiporteuses, modulant chacun une pluralité de porteuses, comprenant :

- au moins un préambule (P) formé d'au moins trois symboles multiporteuses consécutifs, dits symboles de préambule, et
- des symboles de données (D),

**caractérisé en ce que** ledit dispositif d'émission comprend des moyens de modulation, comprenant :

- un premier filtre prototype ($F_1$) filtrant des porteuses portant des éléments de données à valeur complexe correspondant portant des éléments de données à valeur complexe correspondant à des données de préambule, délivrant lesdits symboles de préambule, et
- un deuxième filtre prototype ($F_2$), distinct dudit premier filtre prototype, filtrant des porteuses portant des éléments de données à valeur réelle correspondant à des données utiles, délivrant lesdits symboles de données,

les éléments de données à valeur complexe et les éléments de données à valeur réelle étant associés chacun à une porteuse dudit signal,
ledit premier filtre prototype prenant la forme discrète suivante :

$$g[k] = \frac{F(0)}{2^K} \frac{\Gamma(K+1)}{\Gamma(K/2+1-k \cdot T_r)\Gamma(K/2+1+k \cdot T_r)}$$

avec :

- $K = L_g$ - 1, avec $L_g$ la longueur dudit premier filtre prototype ;
- $F(0)$ une constante ;
- $\Gamma(\cdot)$ la fonction gamma ; et
- $T_r$ un paramètre de résolution temporelle.

9. Dispositif de réception d'un signal formé d'une succession temporelle de symboles multiporteuses, modulant chacun une pluralité de porteuses, comprenant à l'émission :

- au moins un préambule (P) formé d'au moins trois symboles multiporteuses consécutifs, dits symboles de préambule, portant des éléments de données à valeur complexe associés chacun à une porteuse dudit signal, correspondant à des données de préambule, et
- des symboles de données (D), portant des éléments de données à valeur réelle associés chacun à une porteuse dudit signal, correspondant à des données utiles,

**caractérisé en ce que** ledit dispositif de réception comprend des moyens de démodulation des porteuses reçues, mettant en oeuvre :

- un premier filtre prototype ($F_1$) filtrant les porteuses reçues associées aux symboles de préambule, et
- un deuxième filtre prototype ($F_2$), distinct dudit premier filtre prototype, filtrant les porteuses reçues associées aux symboles de données,

ledit premier filtre prototype prenant la forme discrète suivante :

$$g[k] = \frac{F(0)}{2^K} \frac{\Gamma(K+1)}{\Gamma(K/2+1-k \cdot T_r)\Gamma(K/2+1+k \cdot T_r)}$$

avec :

- $K = L_g$ -1, avec $L_g$ la longueur dudit premier filtre prototype ;
- $F(0)$ une constante ;
- $\Gamma(\cdot)$ la fonction gamma ; et
- $T_r$ un paramètre de résolution temporelle.

10. Signal formé d'une succession temporelle de symboles multiporteuses, modulant chacun une pluralité de porteuses, comprenant :

- au moins un préambule (P) formé d'au moins trois symboles multiporteuses consécutifs, dits symboles de préambule, et
- des symboles de données (D),

**caractérisé en ce que** les porteuses portant des éléments de données à valeur complexe correspondant à des données de préambule sont filtrées par un premier filtre prototype ($F_1$), délivrant lesdits symboles de préambule, et **en ce que** les porteuses portant des éléments de données à valeur réelle correspondant à des données utiles sont filtrées par un deuxième filtre prototype ($F_2$), distinct dudit premier filtre prototype et délivrant lesdits symboles de données,
les éléments de données à valeur complexe et les éléments de données à valeur réelle étant associés chacun à une porteuse dudit signal,
ledit premier filtre prototype prenant la forme discrète suivante :

$$g[k] = \frac{F(0)}{2^K} \frac{\Gamma(K+1)}{\Gamma(K/2+1-k \cdot T_r)\Gamma(K/2+1+k \cdot T_r)}$$

avec :

- $K = L_g$ - 1, avec $L_g$ la longueur dudit premier filtre prototype ;
- $F(0)$ une constante ;
- $\Gamma(\cdot)$ la fonction gamma ; et
- $T_r$ un paramètre de résolution temporelle.

**Patentansprüche**

1. Verfahren zum Senden eines Signals, das aus einer zeitlichen Folge von Mehrfachträgersymbolen gebildet ist, die jeweils mehrere Träger modulieren, und das Folgendes umfasst:

- wenigstens eine Präambel (P), die aus wenigstens drei aufeinander folgenden Mehrfachträgersymbolen gebildet ist, die Präambelsymbole genannt werden, und
- Datensymbole (D),

**dadurch gekennzeichnet, dass** das Sendeverfahren einen Modulationsschritt umfasst, in dem Folgendes ausgeführt wird:

- eine Filterung durch ein erstes Prototypfilter (F$_1$) von Trägern, die Datenelemente mit komplexem Wert führen, die Präambeldaten entsprechen, die die Präambelsymbole ergibt, und
- eine Filterung durch ein von dem ersten Prototypfilter verschiedenes zweites Prototypfilter (F$_2$) von Trägern, die Datenelemente mit reellem Wert führen, die Nutzdaten entsprechen, die Datensymbole ergibt,

wobei die Datenelemente mit komplexem Wert und die Datenelemente mit reellem Wert jeweils einem Träger des Signals zugeordnet sind,
wobei das erste Prototypfilter die folgende diskrete Form annimmt:

$$g[k] = \frac{F(0)}{2^K} \frac{\Gamma(K+1)}{\Gamma(K/2+1-k \cdot T_r)\Gamma(K/2+1+k \cdot T_r)}$$

wobei:

- K = L$_g$ - 1 gilt, wobei L$_g$ die Länge des ersten Prototypfilters ist;
- F(0) eine Konstante ist;
- $\Gamma(\cdot)$ die Gammafunktion ist; und
- T$_r$ ein Parameter der zeitlichen Auflösung ist.

2. Sendeverfahren nach Anspruch 1, **dadurch gekennzeichnet, dass** die Präambel zwei End-Präambelsymbole (p$_{m,0}$, p$_{m,2}$) enthält, die aus Datenelementen gebildet sind, die einen Wert null führen, die wenigstens ein zentrales Präambelsymbol (p$_{m,1}$) umgeben, das Pilotsignale (p$_i$) bildet, die einen Wert führen, der gleich 1 oder -1 ist, wobei i [0, M - 1] der Index des dem Pilotsignal p$_i$ zugeordneten Trägers ist und M die Anzahl von Trägern ist, die dem zentralen Präambelsymbol zugeordnet sind, derart, dass für k = 0, ..., M/4 - 1:

- p$_{4k}$ = p$_{4k+1}$ = 1 und
- p$_{4k+2}$ = p$_{4k+3}$ = -1.

3. Sendeverfahren nach Anspruch 1, **dadurch gekennzeichnet, dass** das zweite Prototypfilter ein orthogonales oder bi-orthogonales Filter ist.

4. Sendeverfahren nach Anspruch 1, **dadurch gekennzeichnet, dass** es einen Schritt des Bestimmens des Parameters T$_r$ der zeitlichen Auflösung des ersten Prototypfilters g[k] anhand eines ersten Parameters $\beta_0$ und eines zweiten Parameters $\beta_1$ umfasst, derart, dass:

$$\beta_0 = \left| \sum_k g^2[k] \cos\left( 2\pi \frac{k}{M} \right) \right| \quad \text{und}$$

$$\beta_I = \left| \sum_p j^p \sum_k g^2[k] \cos\left( 2\pi \frac{pk}{M} \right) \right|$$

wobei $j^2 = -1$, M die Anzahl von Trägern pro Mehrfachträgersymbol ist und $L_g = M$ ist,
wobei der Bestimmungsschritt ermöglicht, den ersten Parameter $\beta_0$ maximal zu machen und/oder den zweiten Parameter $\beta_1$ minimal zu machen.

5. Sendeverfahren nach Anspruch 1, **dadurch gekennzeichnet, dass** es einen Schritt des Bestimmens des Parameters $T_r$ der zeitlichen Auflösung des ersten Prototypfilters g[k] anhand einer Linearkombination aus einem ersten Parameter $\beta_0$ und einem zweiten Parameter $\beta_1$, die gleich $w\beta_0 - (1 - w)\beta_1$ ist, umfasst, derart, dass:

- w ein Gewichtungsfaktor ist, derart, dass $0 \leq w \leq 1$;

$$\beta_0 = \left| \sum_k g^2[k] \cos\left( 2\pi \frac{k}{M} \right) \right| \quad \text{und}$$

$$\beta_I = \left| \sum_p j^p \sum_k g^2[k] \cos\left( 2\pi \frac{pk}{M} \right) \right|$$

wobei $j^2 = -1$, M die Anzahl von Trägern pro Mehrfachträgersymbol ist und $L_g = M$ ist,
wobei der Bestimmungsschritt ermöglicht, die Linearkombination maximal zu machen.

6. Verfahren zum Empfangen eines Signals, das aus einer zeitlichen Folge von Mehrfachträgersymbolen gebildet ist, die jeweils mehrere Träger modulieren, und das beim Senden Folgendes umfasst:

- wenigstens eine Präambel (P), die aus wenigstens drei aufeinander folgenden Mehrfachträgersymbolen gebildet ist, die Präambelsymbole genannt werden, die Datenelemente mit komplexem Wert führen, die jeweils einem Träger des Signals zugeordnet sind, die Präambeldaten entsprechen, und
- Datensymbole (D), die Datenelemente mit reellem Wert führen, die jeweils einem Träger des Signals zugeordnet sind, die Nutzdaten entsprechen,

**dadurch gekennzeichnet, dass** das Empfangsverfahren einen Schritt des Demodulierens der empfangenen Träger umfasst, der Folgendes ausführt:

- eine Filterung empfangener Träger, die den Präambelsymbolen zugeordnet sind, durch ein erstes Prototypfilter (F$_1$), und
- eine Filterung empfangener Träger, die den Datensymbolen zugeordnet sind, durch ein von dem ersten Prototypfilter verschiedenes zweites Prototypfilter (F$_2$),

wobei das erste Prototypfilter die folgende diskrete Form annimmt:

$$g[k] = \frac{F(0)}{2^K} \frac{\Gamma(K+1)}{\Gamma(K/2 + 1 - k \cdot T_r) \Gamma(K/2 + 1 + k \cdot T_r)}$$

wobei:

- K = Lg - 1 gilt, wobei Lg die Länge des ersten Prototypfilters ist;
- F(0) eine Konstante ist;
- $\Gamma(\cdot)$ die Gammafunktion ist; und
- $T_r$ ein Parameter der zeitlichen Auflösung ist.

7. Computerprogramm, das Anweisungen für die Ausführung des Sendeverfahrens nach Anspruch 1 und/oder des Empfangsverfahrens nach Anspruch 6, wenn das Programm durch einen Prozessor abgearbeitet wird, umfasst.

8. Vorrichtung zum Senden eines Signals, das aus einer zeitlichen Folge von Mehrfachträgersymbolen gebildet ist, die jeweils mehrere Träger modulieren, und das Folgendes umfasst:

   - wenigstens eine Präambel (P), die aus wenigstens drei aufeinander folgenden Mehrfachträgersymbolen gebildet ist, die Präambelsymbole genannt werden, und
   - Datensymbole (D),

   dadurch gekennzeichnet, dass die Sendevorrichtung Modulationsmittel umfasst, die Folgendes umfassen:

   - ein erstes Prototypfilter ($F_1$), das Träger filtert, die entsprechende Datenelemente mit komplexem Wert führen, die Datenelemente mit komplexen Wert führen, die Präambeldaten entsprechen, und das die Präambelsymbole ausgibt, und
   - ein zweites Prototypfilter ($F_2$), das von dem ersten Prototypfilter verschieden ist und Träger filtert, die Datenelemente mit reellem Wert führen, die Nutzdaten entsprechen, und das Datensymbole ausgibt,

   wobei die Datenelemente mit komplexem Wert und die Datenelement mit reellem Wert jeweils einem Träger des Signals zugeordnet sind,
   wobei das erste Prototypfilter die folgende diskrete Form annimmt:

$$g[k] = \frac{F(0)}{2^K} \frac{\Gamma(K+1)}{\Gamma(K/2+1-k \cdot T_r)\Gamma(K/2+1+k \cdot T_r)}$$

   wobei:

   - K = $L_g$ - 1 gilt, wobei $L_g$ die Länge des ersten Prototypfilters ist;
   - F(0) eine Konstante ist;
   - $\Gamma(\cdot)$ die Gammafunktion ist; und
   - $T_r$ ein Parameter der zeitlichen Auflösung ist.

9. Vorrichtung zum Empfangen eines Signals, das aus einer zeitlichen Folge von Mehrfachträgersymbolen gebildet, ist, die jeweils mehrere Träger modulieren, das beim Senden Folgendes umfasst:

   - wenigstens eine Präambel (P), die aus wenigstens drei aufeinander folgenden Mehrfachträgersymbolen, die Präambelsymbole genannt werden, gebildet ist, die Datenelemente mit komplexem Wert führen, die jeweils einem Träger des Signals zugeordnet sind und Präambeldaten entsprechen, und
   - Datensymbole (D), die Datenelemente mit reellem Wert führen, die jeweils einem Träger des Signals zugeordnet sind, die Nutzdaten entsprechen,

   dadurch gekennzeichnet, dass die Empfangsvorrichtung Mittel zum Demodulieren der empfangenen Träger umfasst, die Folgendes ausführen:

   - ein erstes Prototypfilter ($F_1$), das die empfangenen Träger filtert, die den Präambelsymbolen zugeordnet sind, und
   - ein zweites Prototypfilter (F2), das von dem ersten Prototypfilter verschieden ist und die empfangenen Träger filtert, die den Datensymbolen zugeordnet sind,

   wobei das erste Prototypfilter die folgende diskrete Form annimmt:

$$g[k] = \frac{F(0)}{2^K} \frac{\Gamma(K+1)}{\Gamma(K/2+1-k\cdot T_r)\Gamma(K/2+1+k\cdot T_r)}$$

wobei:

- $K = L_g$ - 1 gilt, wobei $L_g$ die Länge des ersten Prototypfilters ist;
- F(0) eine Konstante ist;
- $\Gamma(\cdot)$ die Gammafunktion ist; und
- $T_r$ ein Parameter der zeitlichen Auflösung ist.

**10.** Signal, das aus einer zeitlichen Folge von Mehrfachträgersymbolen gebildet ist, die jeweils mehrere Träger modulieren, und das Folgendes umfasst:

- wenigstens eine Präambel (P) die aus wenigstens drei aufeinander folgenden Mehrfachträgersymbolen, die Präambelsymbole genannt werden, gebildet ist, und
- Datensymbole (D),

**dadurch gekennzeichnet, dass** die Träger, die Datenelemente mit komplexem Wert führen, die Präambeldaten entsprechen, durch ein erstes Prototypfilter ($F_1$) gefiltert werden, was die Präambelsymbole ergibt, und dass die Träger, die Datenelemente mit reellem Wert führen, die Nutzdaten entsprechen, durch ein von dem ersten Prototypfilter verschiedenes zweites Prototypfilter ($F_2$) gefiltert werden, was die Datensymbole ergibt, wobei die Datenelemente mit komplexem Wert und die Datenelemente mit reellem Wert jeweils einem Träger des Signals zugeordnet sind, wobei das erste Prototypfilter die folgende diskrete Form annimmt:

$$g[k] = \frac{F(0)}{2^K} \frac{\Gamma(K+1)}{\Gamma(K/2+1-k\cdot T_r)\Gamma(K/2+1+k\cdot T_r)}$$

wobei:

- $K = L_g$ - 1 gilt, wobei $L_g$ die Länge des ersten Prototypfilters ist;
- F(0) eine Konstante ist;
- $\Gamma(\cdot)$ die Gammafunktion ist; und
- $T_r$ ein Parameter der zeitlichen Auflösung ist.

**Claims**

**1.** Method of sending a signal formed of a temporal succession of multicarrier symbols, each modulating a plurality of carriers, comprising:

- at least one preamble (P) formed of at least three consecutive multicarrier symbols, termed preamble symbols, and
- data symbols (D),

**characterized in that** said method of sending comprises a modulation step, implementing:

- a filtering, by a first prototype filter ($F_1$), of the carriers carrying complex-valued data elements corresponding to preamble data, delivering said preamble symbols, and
- a filtering, by a second prototype filter ($F_2$) distinct from said first prototype filter, of the carriers carrying real-valued data elements corresponding to payload data, delivering said data symbols,

the complex-valued data elements and the real-valued data elements each being associated with a carrier of said signal,

said first prototype filter taking the following discrete form:

$$g[k] = \frac{F(0)}{2^K} \frac{\Gamma(K+1)}{\Gamma(K/2+1-k\cdot T_r)\Gamma(K/2+1+k\cdot T_r)}$$

with:

- $K = L_g$ - 1, with $L_g$ the length of said first prototype filter;
- $F(0)$ a constant;
- $\Gamma(\cdot)$ the gamma function; and
- $T_r$ a temporal resolution parameter.

2. Method of sending according to Claim 1, **characterized in that** said preamble comprises two end preamble symbols $(p_{m,0}, p_{m,2})$ consisting of data elements carrying a zero value, bracketing at least one central preamble symbol $(p_{m,1})$ consisting of pilots $p_i$ carrying a value equal to 1 or -1, with $i \in [0, M - 1]$ the index of the carrier associated with the pilot $p_i$ and $M$ the number of carriers associated with said central preamble symbol, such that, for $k = 0,...,M/4 - 1$:

- $p_{4k} = p_{4k+1} = 1$ and
- $p_{4k+2} = p_{4k+3} = -1$.

3. Method of sending according to Claim 1, **characterized in that** said second prototype filter is an orthogonal or bi-orthogonal filter.

4. Method of sending according to Claim 1, **characterized in that** it comprises a step of determining said temporal resolution parameter $T_r$ of the first prototype filter $g[k]$, on the basis of a first parameter $\beta_0$ and of a second parameter $\beta_1$, such that:

$$- \quad \beta_0 = \left| \sum_k g^2[k] \cos\left(2\pi \frac{k}{M}\right) \right| \quad \text{and}$$

$$- \quad \beta_1 = \left| \sum_p j^p \sum_k g^2[k] \cos\left(2\pi \frac{pk}{M}\right) \right|.$$

with $j^2 = -1$, $M$ the number of carriers per multicarrier symbol and $L_g = M$,
said determining step making it possible to maximize said first parameter $\beta_0$ and/or to minimize said second parameter $\beta_1$.

5. Method of sending according to Claim 1, **characterized in that** it comprises a step of determining said temporal resolution parameter $T_r$ of the first prototype filter $g[k]$, on the basis of a linear combination of a first parameter $\beta_0$ and of a second parameter $\beta_1$ equal to $w\beta_0$ - (1 - $w$)$\beta_1$, such that:

- $w$ is a weighting factor such that $0 \leq w \leq 1$;

$$- \quad \beta_0 = \left| \sum_k g^2[k] \cos\left(2\pi \frac{k}{M}\right) \right| ; \quad \text{and}$$

-

$$\beta_1 = \left| \sum_p j^p \sum_k g^2[k] \cos\left(2\pi \frac{pk}{M}\right) \right|$$

with $j^2 = -1$, $M$ the number of carriers per multicarrier symbol and $L_g = M$,

said determining step making it possible to maximize said linear combination.

6. Method of receiving a signal formed of a temporal succession of multicarrier symbols, each modulating a plurality of carriers, comprising at the sending end:

- at least one preamble (P) formed of at least three consecutive multicarrier symbols, termed preamble symbols, carrying complex-valued data elements each associated with a carrier of said signal, corresponding to preamble data, and
- data symbols (D), carrying real-valued data elements each associated with a carrier of said signal, corresponding to payload data,

**characterized in that** said method of receiving comprises a step of demodulating the carriers received, implementing:

- a filtering of the received carriers associated with the preamble symbols by a first prototype filter ($F_1$), and
- a filtering of the received carriers associated with the data symbols by a second prototype filter ($F_2$), distinct from said first prototype filter,

said first prototype filter taking the following discrete form:

$$g[k] = \frac{F(0)}{2^K} \frac{\Gamma(K+1)}{\Gamma(K/2+1-k \cdot T_r)\Gamma(K/2+1+k \cdot T_r)}$$

with:

- $K = L_g$ - 1, with $L_g$ the length of said first prototype filter;
- $F(0)$ a constant;
- $\Gamma(\cdot)$ the gamma function; and
- $T_r$ a temporal resolution parameter.

7. Computer program comprising instructions for the implementation of the method of sending according to Claim 1 and/or of the method of receiving according to Claim 6, when said program is executed by a processor.

8. Device for sending a signal formed of a temporal succession of multicarrier symbols, each modulating a plurality of carriers, comprising:

- at least one preamble (P) formed of at least three consecutive multicarrier symbols, termed preamble symbols, and
- data symbols (D),

**characterized in that** said sending device comprises modulation means, comprising:

- a first prototype filter ($F_1$) filtering carriers carrying complex-valued data elements corresponding to preamble data, delivering said preamble symbols, and
- a second prototype filter ($F_2$), distinct from said first prototype filter, filtering carriers carrying real-valued data elements corresponding to payload data, delivering said data symbols,

the complex-valued data elements and the real-valued data elements each being associated with a carrier of said signal,
said first prototype filter taking the following discrete form

$$g[k] = \frac{F(0)}{2^K} \frac{\Gamma(K+1)}{\Gamma(K/2+1-k \cdot T_r)\Gamma(K/2+1+k \cdot T_r)}$$

with:

- $K = L_g$ - 1, with $L_g$ the length of said first prototype filter;

- $F(0)$ a constant;
- $\Gamma\,(\cdot)$ the gamma function; and
- $T_r$ a temporal resolution parameter.

9. Device for receiving a signal formed of a temporal succession of multicarrier symbols, each modulating a plurality of carriers, comprising at the sending end:

    - at least one preamble (P) formed of at least three consecutive multicarrier symbols, termed preamble symbols, carrying complex-valued data elements each associated with a carrier of said signal, corresponding to preamble data, and
    - data symbols (D), carrying real-valued data elements each associated with a carrier of said signal, corresponding to payload data,

**characterized in that** said receiving device comprises means for demodulating the carriers received, implementing:

    - a first prototype filter ($F_1$) filtering the received carriers associated with the preamble symbols, and
    - a second prototype filter ($F_2$), distinct from said first prototype filter, filtering the received carriers associated with the data symbols,

said first prototype filter taking the following discrete form

$$g[k] = \frac{F(0)}{2^K} \frac{\Gamma(K+1)}{\Gamma(K/2+1-k\cdot T_r)\Gamma(K/2+1+k\cdot T_r)}$$

with:

    - $K = L_g - 1$, with $L_g$ the length of said first prototype filter;
    - $F(0)$ a constant;
    - $\Gamma\,(\cdot)$ the gamma function; and
    - $T_r$ a temporal resolution parameter.

10. Signal formed of a temporal succession of multicarrier symbols, each modulating a plurality of carriers, comprising:

    - at least one preamble (P) formed of at least three consecutive multicarrier symbols, termed preamble symbols, and
    - data symbols (D),

**characterized in that** the carriers carrying complex-valued data elements corresponding to preamble data are filtered by a first prototype filter ($F_1$), delivering said preamble symbols, and **in that** the carriers carrying real-valued data elements corresponding to payload data are filtered by a second prototype filter ($F_2$), distinct from said first prototype filter and delivering said data symbols, the complex-valued data elements and the real-valued data elements each being associated with a carrier of said signal,
said first prototype filter taking the following discrete form

$$g[k] = \frac{F(0)}{2^K} \frac{\Gamma(K+1)}{\Gamma(K/2+1-k\cdot T_r)\Gamma(K/2+1+k\cdot T_r)}$$

with:

    - $K = L_g - 1$, with $L_g$ the length of said first prototype filter;
    - $F(0)$ a constant;
    - $\Gamma\,(\cdot)$ the gamma function; and
    - $T_r$ a temporal resolution parameter.

$p_{m,0}$ $p_{m,1}$ $p_{m,2}$

Fig. 1

Fig. 2A

Fig. 2B

Fig. 3

Fig. 4

Fig. 5B

Fig. 6

Fig. 5A

Fig. 5C

Fig. 7

Fig. 8

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008007019 A

- WO 0225883 A

**Littérature non-brevet citée dans la description**

- **C. LÉLÉ ; P. SIOHAN ; R. LEGOUABLE.** 2 db better than CP-OFDM with OFDM/OQAM for preamble-based channel estimation. ICC, Mai 2008
- **M. I. DOROSLOVAČKI.** Product of second moments in time and frequency for discrète time signals and the uncertainty limit. *Signal Processing,* vol. 67

- **M. I. DOROSLOVAČKI.** *Product of second moments in time and frequency for discretetime signals and the uncertainty limit*
- **Y.H. MA ; P.L. SO ; E. GUNAWAN.** *Performance analysis of ofdm systems for broadband power line communications under impulsive noise and multipath effects,* Avril 2005, vol. 20 (2), 674-682